(19) Europäisches Patentamt
European Patent Office
Office européen des brevets

(11) Veröffentlichungsnummer : **0 410 931 B1**

(12) # EUROPÄISCHE PATENTSCHRIFT

(45) Veröffentlichungstag der Patentschrift : **01.06.94 Patentblatt 94/22**

(51) Int. Cl.$^5$ : **C09B 62/503,** D06P 3/10, D06P 1/384

(21) Anmeldenummer : **90810547.1**

(22) Anmeldetag : **17.07.90**

(54) **Faserreaktive Formazanfarbstoffe, Verfahren zu deren Herstellung und deren Verwendung.**

(30) Priorität : **24.07.89 CH 2763/89**

(43) Veröffentlichungstag der Anmeldung : **30.01.91 Patentblatt 91/05**

(45) Bekanntmachung des Hinweises auf die Patenterteilung : **01.06.94 Patentblatt 94/22**

(84) Benannte Vertragsstaaten : **BE CH DE ES FR GB IT LI**

(56) Entgegenhaltungen :
**EP-A- 0 280 139**
**EP-A- 0 302 115**

(73) Patentinhaber : **CIBA-GEIGY AG**
**Klybeckstrasse 141**
**CH-4002 Basel (CH)**

(72) Erfinder : **Lehmann, Urs, Dr.**
**Palmenstrasse 17**
**CH-4055 Basel (CH)**
Erfinder : **Koller, Josef**
**Römerstrasse 22**
**CH-4153 Reinach (CH)**

**EP 0 410 931 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft neue faserreaktive Formazanfarbstoffe, Verfahren zu deren Herstellung und die Verwendung dieser Farbstoffe zum Färben und Bedrucken von Fasermaterialien.

Gegenstand der vorliegenden Erfindung sind faserreaktive Formazanfarbstoffe der Formel

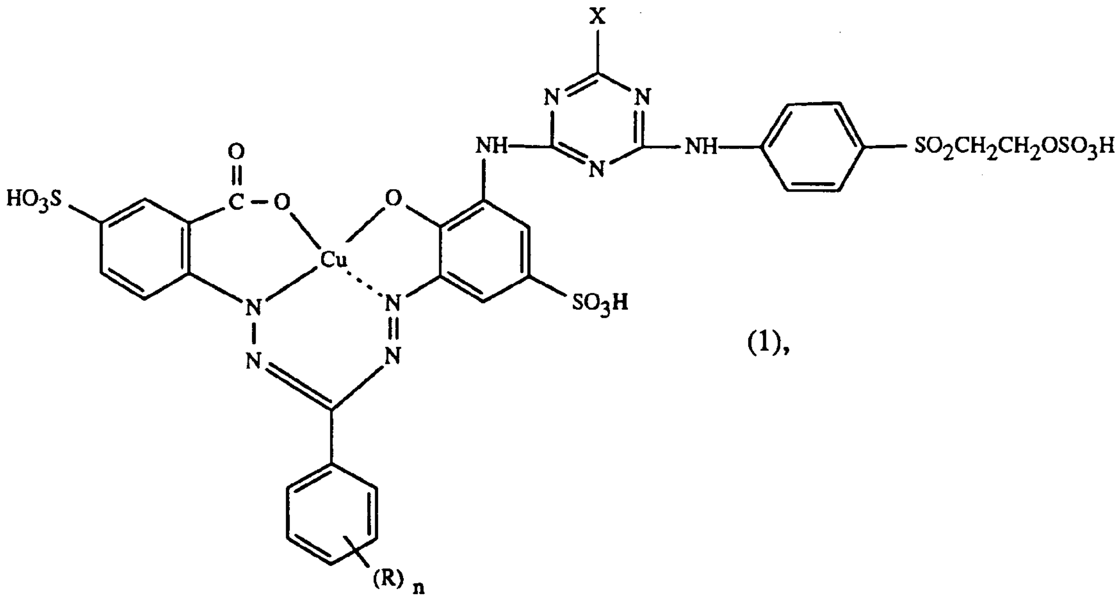

(1),

worin R $C_1$-$C_4$-Alkyl, $C_1$-$C_4$-Alkoxy, Halogen, Cyan oder Nitro, X Fluor oder Chlor und n die Zahl 0, 1 oder 2 ist.

Als $C_1$-$C_4$-Alkyl kommt für R in Formel (1) z.B. Methyl, Aethyl, Propyl, Isopropyl, Butyl, tert.-Butyl, sek.-Butyl oder Isobutyl, insbesondere Methyl, in Betracht.

Als $C_1$-$C_4$-Alkoxy kommt für R in Formel (1) z.B. Methoxy, Aethoxy, Propoxy, Isopropoxy, Butoxy, tert.-Butoxy, sek.-Butoxy oder Isobutoxy, insbesondere Methoxy, in Betracht.

Als Halogen kommt für R in Formel (1) z.B. Fluor, Brom oder vorzugsweise Chlor in Betracht.

Bevorzugt sind Farbstoffe der Formel (1), worin n die Zahl 0 ist.

Ferner sind Farbstoffe der Formel (1) bevorzugt, worin X Chlor ist.

Gegenstand der Erfindung ist ferner ein Verfahren zur Herstellung der Farbstoffe der Formel (1), welches dadurch gekennzeichnet ist, dass man eine Verbindung der Formel

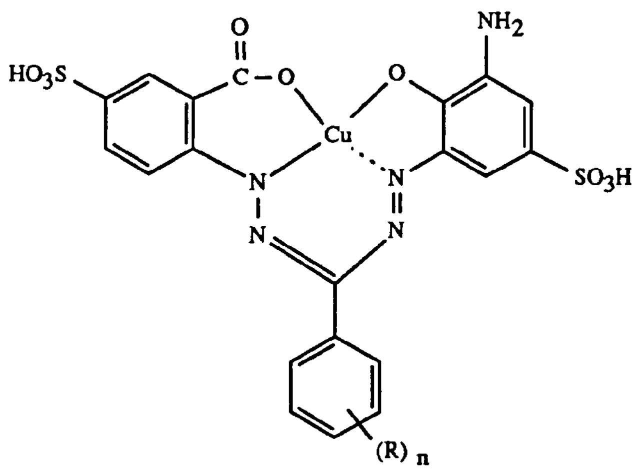

(2),

worin R und n die unter Formel (1) angegebenen Bedeutungen haben, mit einer den Rest der Formel

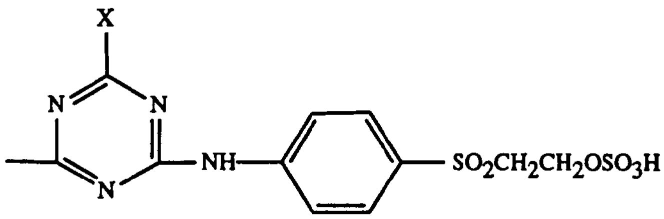

(3)

einführenden Verbindung, worin X die unter Formel (1) angegebenen Bedeutungen hat, umsetzt, oder eine Verbindung der Formel (2) zunächst mit einer Verbindung der Formel

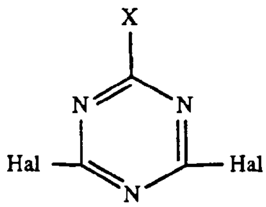

(4),

worin X Fluor oder Chlor und Hal je Halogen, insbesondere Fluor oder Chlor, bedeutet, kondensiert und das Kondensationsprodukt anschliessend mit einer den Rest der Formel

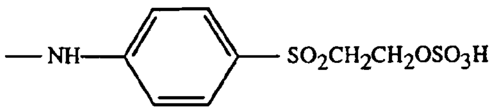

(5),

einführenden Verbindung umsetzt.

Als den Rest der Formel (3) einführende Verbindungen kommen vorzugsweise entsprechende Halogenide, insbesondere Chloride oder Fluoride, in Betracht. Als Beispiele seien genannt:

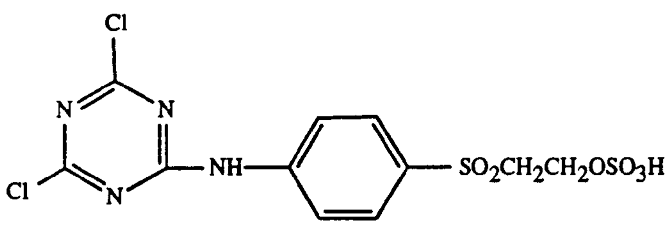

,

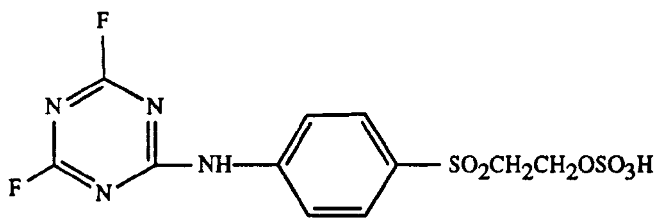

.

Eine bevorzugte Ausführungsform des erfindungsgemässen Verfahrens ist dadurch gekennzeichnet, dass man eine Verbindung der Formel (2) zunächst mit einer Verbindung der Formel

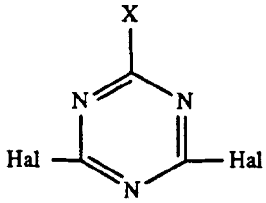

(4),

worin X Fluor oder Chlor und Hal je Halogen, insbesondere Fluor oder Chlor, bedeutet, kondensiert, und das Kondensationsprodukt anschliessend mit einer den Rest der Formel

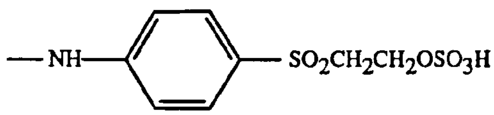

(5),

einführenden Verbindung umsetzt.

Als Beispiele für Verbindungen der Formel (4) seien Cyanurfluorid und Cyanurchlorid genannt. Als Beispiel für den Rest der Formel (5) einführende Verbindungen sei 4-(β-Sulfatoäthylsulfonyl)anilin genannt.

Die Umsetzung der Verbindung der Formel (2) mit der den Rest der Formel (3) einführenden Verbindung bzw. die Kondensation der Verbindung der Formel (2) mit der Verbindung der Formel (4) und die anschliessende Umsetzung des Kondensationsproduktes mit der den Rest der Formel (5) einführenden Verbindung erfolgt vorzugsweise in wässriger Lösung, Emulsion oder Suspension, bei niedriger Temperatur, z.B. 0 bis 40°C, und bei schwach saurem, neutralem bis schwach alkalischem pH-Wert. Vorteilhaft wird der bei der Kondensation freiwerdende Halogenwasserstoff laufend durch Zugabe wässrigerAlkalihydroxide, -carbonate oder -bicarbonate neutralisiert.

Bevorzugt verwendet man für das erfindungsgemässe Verfahren Verbindungen der Formel (2), worin n die Zahl 0 ist.

Eine weitere bevorzugte Ausführungsform des erfindungsgemässen Verfahrens ist dadurch gekennzeichnet, dass man eine den Rest der Formel (3) einführende Verbindung verwendet, worin X Chlor ist.

Als Verbindung der Formel (4) verwendet man bevorzugt Cyanurchlorid.

Die Verbindungen der Formel (2) sind an sich bekannt oder können in Analogie zu bekannten Verbindungen hergestellt werden. Zur Herstellung der Kupferkomplexe der vierzähnigen Formazane sei auf K. Venkataraman, The Chemistry of Synthetic Dyes, Volume VI, Seiten 287 bis 297, Academic Press New York und London (1972) und Ullmanns Encyklopädie der technischen Chemie, Band 11, Seiten 714 bis 718, Verlag Chemie (1976) verwiesen.

Die den Rest der Formel (3) oder (5) einführenden Verbindungen sowie die Verbindungen der Formel (4) sind ebenfalls an sich bekannt oder können in Analogie zu bekannten Verbindungen hergestellt werden.

Die Farbstoffe der Formel (1) eignen sich zum Färben und Bedrucken der verschiedensten Fasermaterialien, insbesondere textiler Fasermaterialien, vorzugsweise hydroxylgruppen- oder stickstoffhaltige Textilmaterialien, wie z.B. Seide, Fasermaterialien aus Cellulose und insbesondere Wolle, synthetische Polyamidfasermaterialien, wie z.B. Polyamid-6 und Polyamid-6,6 und Leder und Papier. Man erhält mit den Farbstoffen der Formel (1) egale Färbungen in blauen Tönen mit guten Allgemeinechtheiten, insbesondere guter Nassechtheit, wie z.B. Nassreibechtheit und guter Lichtechtheit. Ferner sind die Farbstoffe der Formel (1) sehr gut mit anderen Reaktivfarbstoffen kombinierbar. Das oben genannte Textilmaterial kann in den verschiedensten Verarbeitungsformen vorliegen, wie z.B. als Garn, Gewebe oder Gewirke.

Hervorzuheben ist, dass die erfindungsgemässen Farbstoffe der Formel (1) eine hohe Reduktionsstabilität, ein gutes Aufziehverhalten und gute Fixiergeschwindigkeit sowie eine hohe Faseregalität aufweisen und keinen Dichroismus zeigen.

Aus der EP-A-0 280 139 sind Formazanfarbstoffe bekannt, worin der an die Triazingruppe gebundene Phenylrest zusätzlich einen über eine Thio- oder Aminogruppe gebundenen Alkyl- oder Arylrest enthält.

Aus der EP-A-0 302 115 sind Formazanfarbstoffe bekannt, welche sich von den erfindungsgemässen Formazanfarbstoffen hinsichtlich der Stellung einer Sulfogruppe und der Stellung des Restes der Formel $-SO_2CH_2CH_2OSO_3H$ unterscheiden.

Die erfindungsgemässen Farbstoffe der Formel (1), welche zwei Sulfonsäuregruppen enthalten, liegen entweder in der Form ihrer freien Säure oder vorzugsweise als deren Salze vor. Als Salze kommen beispielsweise Alkali-, Erdalkali- oder Ammoniumsalze oder die Salze eines organischen Amins in Betracht. Als Beispiel

seien die Natrium-, Lithium-, Kalium- oder Ammoniumsalze oder das Salz des Triäthanolamins genannt.

Hervorzuheben ist ferner für die erfindungsgemässen Farbstoffe der Formel (1) deren Eignung zum Trichromie-Färben und -Bedrucken von natürlichen oder synthetischenPolyamid-fasermaterialien zusammen mit einem faserreaktiven gelb- oder orangefärbenden Farbstoff und einem faserreaktiven rot färbenden Farbstoff.

Unter Trichromie ist die additive Farbmischung passendgewählter gelb- bzw. orange-, rot- und blaufärbender Farbstoffe zu verstehen, mit denen praktisch jede gewünschte Nuance des sichtbaren Farbspektrums durch geeignete Wahl der Mengenverhältnisse eingestellt werden kann.

Die in dem Trichromie-Verfahren zu verwendenden Farbstoffe sollen einen gleichmässigen Farbaufbau bei gleichzeitiger Nuancenkonstanz in verschiedenen Konzentrationen und eine gute Kombinierbarkeit zeigen.

Gegenstand der Erfindung ist somit auch ein Verfahren zum Trichromie-Färben oder -Bedrucken von natürlichen und synthetischen Polyamidfasermaterialien mit Farbstoffmischungen faserreaktiver Farbstoffe, welches dadurch gekennzeichnet ist, dass man einen blaufärbenden Farbstoff der Formel (1) zusammen mit einem gelb- oder orangefärbenden sulfogruppenhaltigen Reaktivfarbstoff und einem rotfärbenden sulfogruppenhaltigen Reaktivfarbstoff verwendet.

Insbesondere werden faserreaktive, sulfogruppenhaltige gelb- oder orange- und rotfärbende Azofarbstoffe verwendet, die als faserreaktive Gruppe vorzugsweise eine Halogentriazin- oder Halogenpyrimidingruppe oder eine Gruppe der aliphatischen Reihe enthalten.

Als Halogenpyrimidingruppe oder Gruppe der aliphatischen Reihe werden vorzugsweise als faserreaktive Gruppe Difluorchlorpyrimidinyl, insbesondere 2,4-Difluor-5-chlorpyrimidinyl, oder $\alpha,\beta$-Dihalogenpropionyl, insbesondere $\alpha,\beta$-Dibrompropionyl, oder $\alpha$-Halogenacryloyl, insbesondere $\alpha$-Bromacryloyl, verwendet.

Als gelb- oder orangefärbende, sulfogruppenhaltige, faserreaktive Farbstoffe kommen z.B. die folgenden in Betracht:

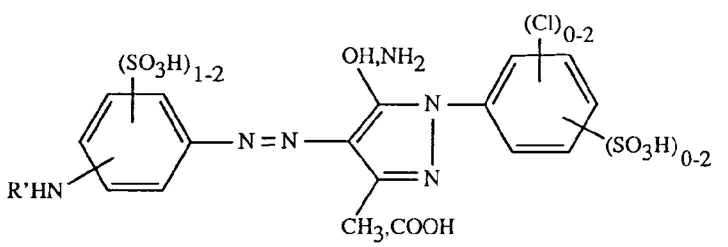
(6)

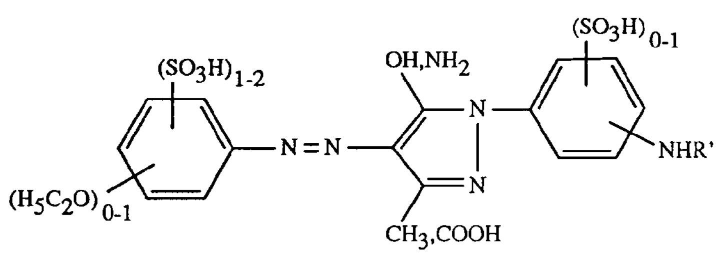
(7)

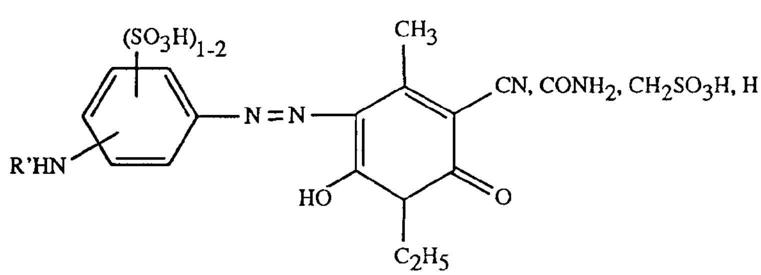
(8)

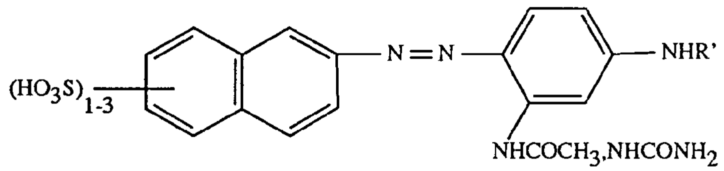

(9)

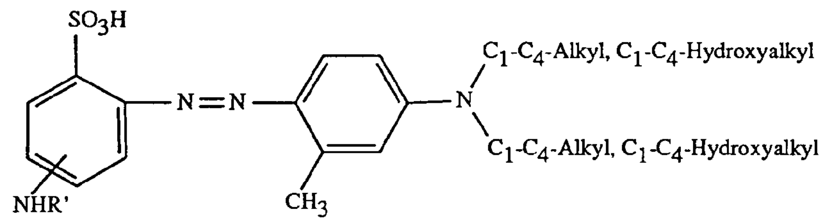

(10)

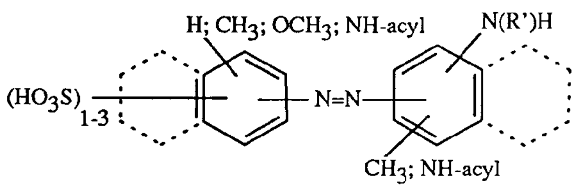

(11)

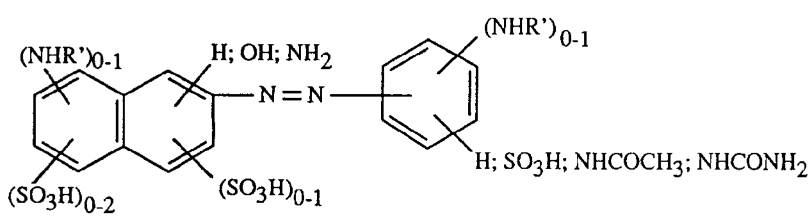

(12)

Als rotfärbende, sulfogruppenhaltige, faserreaktive Farbstoffe kommen z.B. die folgenden in Betracht:

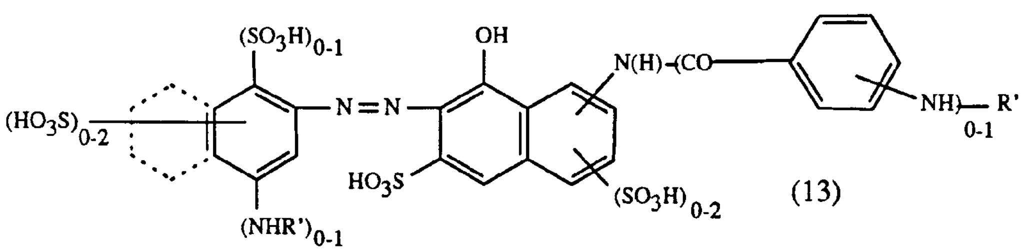

(13)

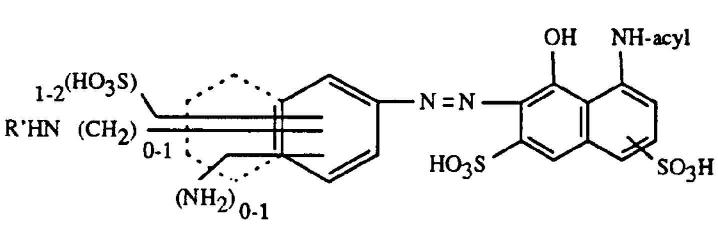

(14)

worin acyl z.B. Acetyl oder gegebenenfalls substituiertes Benzoyl ist.

Die durch Punkte angedeuteten kondensierten Ringe stehen für alternativ mögliche Napthalinsysteme.

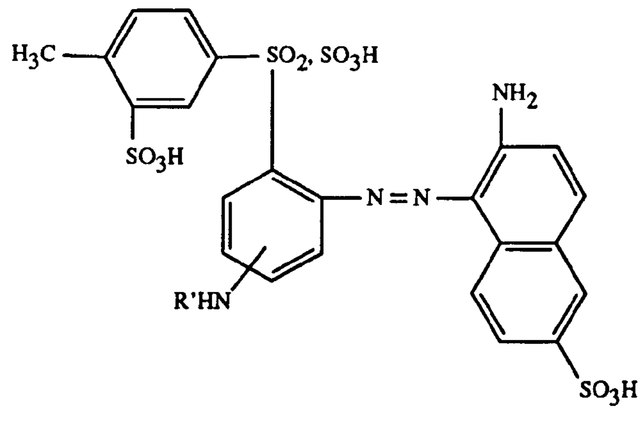

(15)

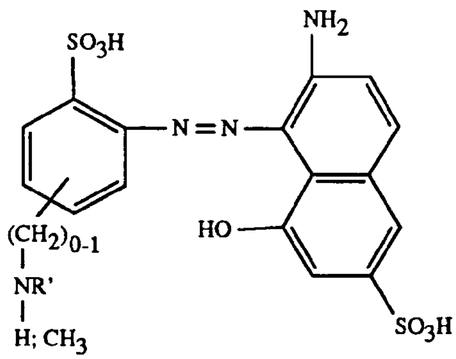

(16)

In den vorstehenden Formeln bedeutet R′ einen faserreaktiven Rest, insbesondere einen faserreaktiven Rest der Halogentriazin- oder der Halogen-Pyrimidinreihe oder der aliphatischen Reihe, vorzugsweise bedeutet R′ Difluorchlorpyrimidinyl oder α,β-Dihalogenpropionyl oder α-Bromacryloyl. Besonders bevorzugt ist R′ 2,4-Difluor-5-chlorpyrimidin-6-yl oder α,β-Dibrompropionyl oder α-Bromacryloyl.

In dem erfindungsgemässen Verfahren zum Trichromie-Färben oder -Bedrucken von natürlichen und synthetischen Polyamidfasermaterialien werden als blaufärbende Farbstoffe die obengenannten, insbesondere diejenigen der Formel (1), worin n die Zahl 0 ist oder X Chlor ist, insbesondere diejenigen der Formel (1), worin n die Zahl 0 und X Chlor ist, verwendet.

Als besonders bevorzugte gelb- oder orangefärbende Farbstoffe kommen in Betracht:

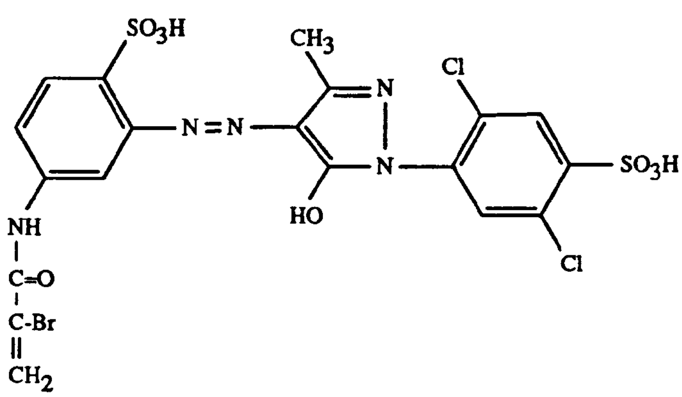

(17)

oder

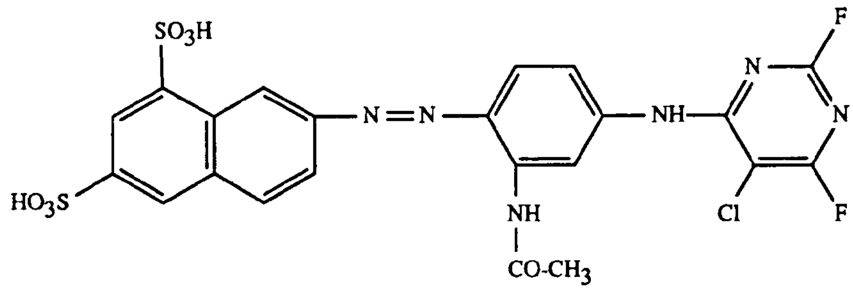

(18)

Als besonders bevorzugte rotfärbende Farbstoffe kommen in Betracht:

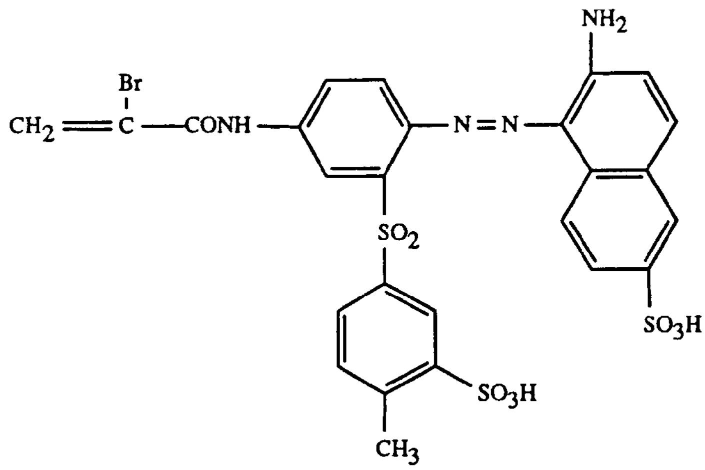

(19)

oder

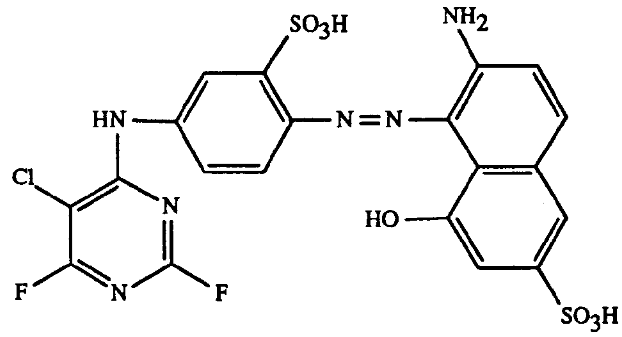

(20)

Ein weiterer Gegenstand der Erfindung sind Trichromie-Farbstoffmischungen, welche dadurch gekennzeichnet sind, dass sie einen blaufärbenden Farbstoff der Formel (1) zusammen mit einem gelb- oder orangefärbenden sulfogruppenhaltigen Reaktivfarbstoff und einem rotfärbenden sulfogruppenhaltigen Reaktivfarbstoff enthalten, wobei für den blaufärbenden Farbstoff der Formel (1), den gelb- oder orangefärbenden sulfogruppenhaltigen Reaktivfarbstoff und den rotfärbenden sulfogruppenhaltigen Reaktivfarbstoff die zuvor angegebenen Bedeutungen und Bevorzugungen gelten.

Die in dem erfindungsgemässen Verfahren zum Trichromie-Färben oder -Bedrucken und in den erfindungsgemässen Trichromie-Farbstoffmischungen verwendeten gelb- bzw. orange- und rotfärbenden Farbstoffe sind bekannt oder können in Analogie zu bekannten Farbstoffen hergestellt werden. Die Farbstoffe liegen entweder in der Form ihrer freien Sulfonsäure oder vorzugsweise als deren Salz vor, wobei die gleichen Salze wie für die Farbstoffe der Formel (1) angegeben verwendet werden können.

Die Mengen, in denen die Farbstoffe der Formel (1) und die gelb- bzw. orange- und rotfärbenden faserreaktiven Farbstoffe in den Färbebädern oder Druckpasten verwendet werden, können je nach der gewünschten Farbtiefe in weiten Grenzen schwanken, im allgemeinen haben sich Mengen von 0,01 bis 10 Gewichtsprozent, insbesondere 2 bis 10 Gewichtsprozent, bezogen auf das Färbegut, bzw. die Druckpaste, als vorteilhaft erwiesen.

Vorzugsweise wird in dem erfindungsgemässen Verfahren Fasermaterial aus natürlichen Polyamiden, insbesondere Wolle, verwendet.

Besondere Vorrichtungen sind beim erfindungsgemässen Verfahren nicht erforderlich. Es können die üblichen Färbe- und Druckapparate und -maschinen, beispielsweise für Flocke, Kammzug, Stranggarn, Wickelkörper, Stückware und Teppiche verwendet werden.

Die wässrigen Färbebäder können neben dem Reaktivfarbstoff noch Hilfsmittel, insbesondere Egalisierhilfsmittel, enthalten. Die Egalisierhilfsmittel werden in einer Menge von 0,3 bis 3 Gewichtsprozent, bezogen auf das Fasermaterial, verwendet.

Als weitere Hilfsmittel können die Färbebäder Mineralsäuren, wie Schwefelsäure, Sulfaminsäure oder Phosphorsäure, organische Säuren, zweckmässig niedere, aliphatische Carbonsäuren, wie Ameisensäure, Essigsäure oder Maleinsäure, enthalten. Die Säuren dienen vor allem der Einstellung des pH-Wertes der erfindungsgemäss verwendeten Flotten.

Vorzugsweise erfolgt die Einstellung des pH-Wertes von 3 bis 6 mit einer organischen Säure, insbesondere Ameisensäure oder Essigsäure.

Vorzugsweise färbt man bei einem pH-Wert von 4 bis 6, insbesondere 4,2 bis 5,5.

Ferner kann die Färbeflotte verschiedene Salze, insbesondere Ammoniumsalze oder Alkalisalze, wie z.B. Ammoniumsulfat oder Natriumsulfat als Hilfsmittel enthalten.

Das Flottenverhältnis kann innerhalb eines weiten Bereichs gewählt werden, von 1:6 bis 1:80, vorzugsweise 1:10 bis 1:50.

Das Färben erfolgt aus wässriger Flotte nach dem Ausziehverfahren z.B. bei einer Temperatur zwischen 80 und 105°C bzw. 110°C bei Verwendung eines Formaldehyd-abspaltenden Wollschutzmittels, vorzugsweise zwischen 98° und 103°C.

Die Färbedauer beträgt in der Regel 30 bis 90 Minuten.

Eine besonders bevorzugte Ausführungsform des erfindungsgemässen Verfahrens ist dadurch gekennzeichnet, dass man nach dem Färben bei vorzugsweise 98 bis 103°C die Färbeflotte abkühlen lässt auf ca. 75° bis 90°C und den pH-Wert auf 8 bis 9, vorzugsweise auf ca. 8,5, einstellt. Die Einstellung des pH-Wertes kann mit üblichen Mitteln erfolgen, z.B. Alkalihydroxidlösungen sowie insbesondere mit wässriger Ammoniaklösung üblicher Konzentration, z.B. 25 Gewichtsprozent Ammoniak enthaltend.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: 3,37 Teile 4-(2′-Sulfatoäthylsulfonyl)anilin werden in 50 Teilen Wasser aufgenommen und bei Raumtemperatur mit Natronlauge bei einem pH-Wert von 5 bis 6 in Lösung gebracht. Nach Zugabe von 1,26 Teilen Natriumacetat und Kühlung auf 0 bis 2° wird eine Lösung von 2,43 Teilen Cyanurchlorid in 20 Teilen Aceton innerhalb von 10 bis 15 Minuten zugetropft, wobei der pH-Wert mit Natronlauge bei 6,25 gehalten wird. Nach beendeter Kondensation wird das weisse Produkt abgenutscht und mit wenig Wasser gewaschen. Das Nutschgut wird in 75 Teilen 2-Methoxyäthanol und 25 Teilen Wasser suspendiert und auf 10° gekühlt. Zu dieser Suspension lässt man innerhalb 30 Minuten eine Lösung aus 5,96 Teilen des Chromophors der Formel (101)

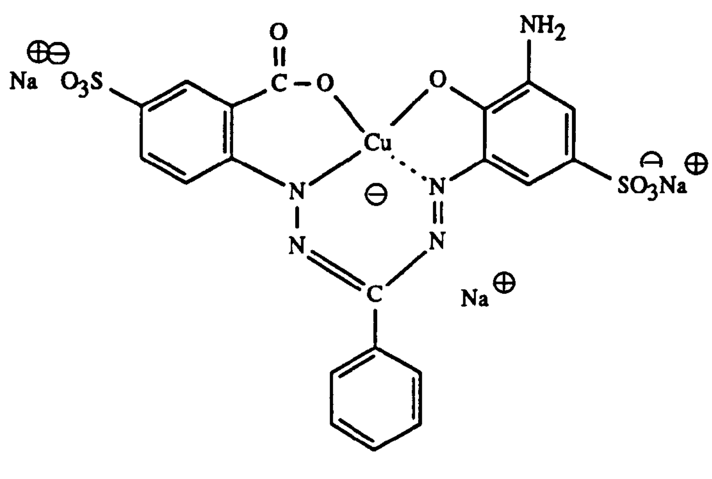

(101)

in 50 Teilen Wasser zutropfen, wobei der pH-Wert mit Natronlauge bei 6,5 gehalten wird. Nach Ausrühren über Nacht und Zugabe von Natriumchlorid wird der Farbstoff abgenutscht und mit Natriumchlorid-Lösung gewaschen. Nach der Trocknung bei 60 bis 70° erhält man 10,1 Teile eines Farbstoffes, der der Formel (102) entspricht.

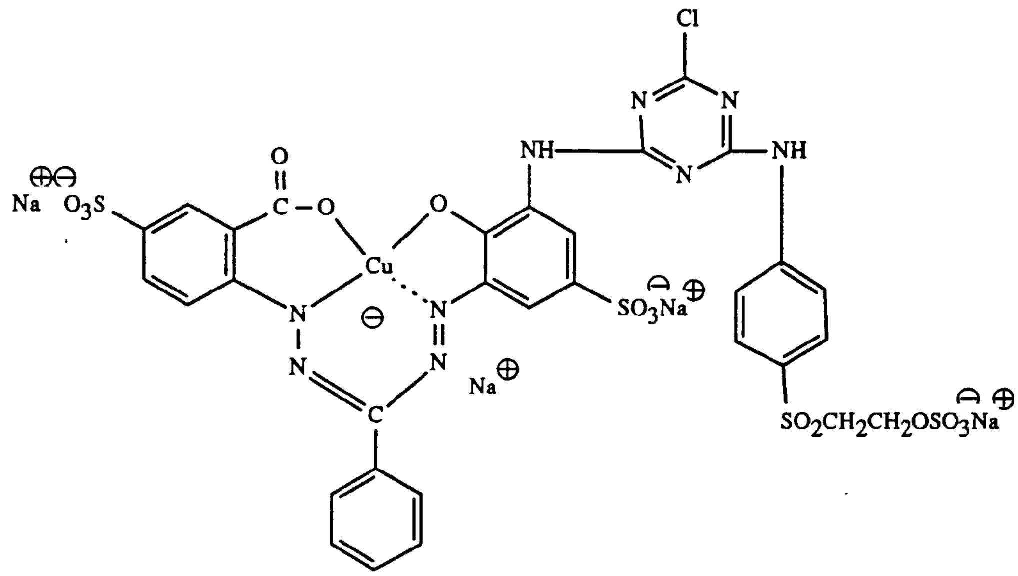

(102)

Der Farbstoff der Formel (102) färbt Wolle in echten blauen Farbtönen.

Beispiel 2: 2,81 Teile 4-(2-Sulfatoäthylsulfonyl)anilin werden in 42 Teilen Wasser aufgenommen und bei Raumtemperatur mit Natronlauge bei einem pH-Wert von 6,5 in Lösung gebracht. Nach Kühlung auf 0 bis 2° werden 1,49 Teile Cyanfluorid innerhalb von 1 bis 2 Minuten zugetropft, wobei der pH durch Zugabe von Natronlauge bei 6 bis 6,5 gehalten wird. Nach beendeter Kondensation lässt man bei 5° innerhalb von 10 Minuten eine Lösung aus 5,96 Teilen des Chromophors der Formel (101) in 50 Teilen Wasser zutropfen, wobei der pH-Wert mit Natronlauge bei 6,25 gehalten wird. Nach Ausrühren bei Raumtemperatur und Zugabe von Natriumchlorid wird der Farbstoff abgenutscht, mit Natriumchlorid-Lösung gewaschen und bei 60 bis 70° getrocknet. Man erhält 5,0 Teile eines Farbstoffs, der der Formel (103) entspricht.

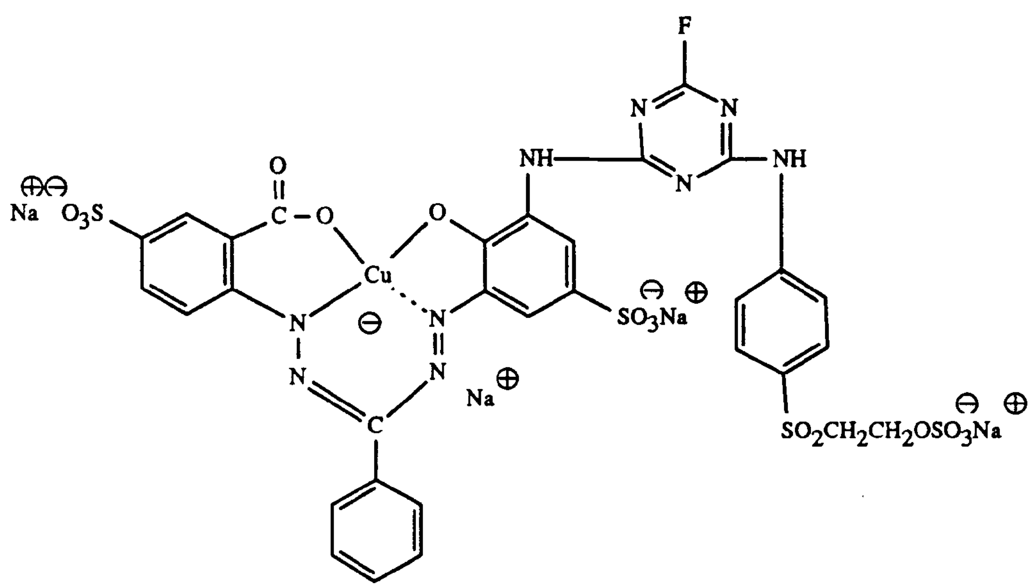

(103)

Der Farbstoff der Formel (103) färbt Wolle in echten blauen Farbtönen.

Färbebeispiel 1

In 4000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

4 Teile des gemäss Beispiel 1 erhaltenen Farbstoffes werden in 100 Teilen Wasser heiss gelöst und dem obigen Färbebad zugegeben. Dann wird mit 100 Teilen vorgenetzten Wollstrickgarns eingegangen und im Verlaufe von 30 Minuten die Temperatur des Bades von 50 auf 80° erhöht. Nach 20 Minuten Färben bei 80° wird zum Sieden erhitzt und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung aufbleibend 8,5 erhöht und das Färbegut 20 Minuten bei dieser Temperatur nachbehandelt. Nach gründlichem Spülen mit heissem und kaltem Wasser, Ansäuern mit 1 Teil 80%iger Ameisensäure, Zentrifugieren und Trocknen erhält man ein dunkelblau gefärbtes Wollgarn von sehr guter Nass- und Reibechtheit sowie ausgezeichneter Lichtechtheit.

Färbebeispiel 2

Ein filzfest ausgerüstetes Wollgewebe wird mit der nachfolgend beschriebenen Zubereitung getränkt und auf dem Foulard auf eine Feuchtigkeitsaufnahme von 250 % abgequetscht.

| | | |
|---|---|---|
| 4 | Teile Diaprint REG® | (säurebeständiges Verdickungsmittel), |
| 1 | Teil Sulfaminsäure | |
| 0,2 | Teile Thymol | |
| 0,2 | Teile Emulgator | |
| 94,6 | Teile Wasser | |
| 100 | Teile | |

Das imprägnierte Material wird anschliessend in einer heizbaren Presse während 3 Minuten bei 100 bis 105° unter einem Druck von etwa 0,5 kg/cm$^2$ mit einem Transferpapier zusammengepresst, welches ein in üblicher Weise mit dem Farbstoff gemäss Beispiel 2 aufgebrachtes Druckmuster trägt. Nach Spülen und Trocknen des Wollgewebes weist dieses ein entsprechendes, blaues Druckmuster von sehr guten Echtheitseigenschaften auf.

Färbebeispiel 3

Ein Flanellgewebe aus chlorierter Wolle wird auf einem Foulard mit nachfolgend beschriebener Farbstoffzubereitung getränkt und auf eine Flüssigkeitsaufnahme von 100 % abgequetscht:

50 Teile des Farbstoffes gemäss Beispiel 1
300 Teile Harnstoff
320 Teile Solvitose OFA® à 40 % (Verdickungsmittel
10 Teile einer Mischung von anionaktivem Fettalkoholäther sulfat mit nichtionogenen Netzmitteln
10 Teile des in Färbebeispiel 1 verwendeten Egalisier mittels
10 Teile Natrium-metabisulfit
10 Teile Essigsäure 80%ig
290 Teile Wasser

1000 Teile Foulardierflotte.

Das imprägnierte Gewebe wird anschliessend in aufgerolltem und luftdicht verpacktem Zustand während 48 Stunden bei Raumtemperatur gelagert. Nach Spülen mit kaltem Wasser wird das Material auf frischem Bad mit soviel Ammoniak zu 24 % behandelt, dass ein pH-Wert von 8,5 erreicht wird und während 15 Minuten bei 80° gehalten. Nach Spülen in warmem Wasser wird zum Schluss mit Essigsäure 80%ig abgesäuert und getrocknet. Das Wollgewebe ist in einem vollen Blauton von ausgezeichneten Echtheitseigenschaften gefärbt.

Färbebeispiel 4

Ein Flanellgewebe aus chlorierter Wolle wird auf einem Foulard mit nachfolgend beschriebener Farbstoffzubereitung getränkt und auf eine Flüssigkeitsaufnahme von 100 % abgequetscht:

50 Teile des Farbstoffes gemäss Beispiel 1
300 Teile Solvitose OFA® à 40 % (Verdickungsmittel)
20 Teile einer Mischung von anionaktivem Fettalkoholäthersulfat mit nichtionogenen Netzmitteln
10 Teile des in Färbebeispiel 1 verwendeten Egalisiermittels
20 Teile Essigsäure 80%ig
600 Teile Wasser

1000 Teile Foulardierflotte.

Das imprägnierte Gewebe wird anschliessend in einen Dämpfer gebracht und während 20 bis 40 Minuten mit gesättigtem Dampf behandelt. Nach Spülen mit kaltem Wasser wird das Material auf frischem Bad mit soviel 24%iger Ammoniaklösung behandelt, dass ein pH-Wert von 8,5 erreicht wird und während 15 Minuten bei 80° gehalten. Nach Spülen in warmem Wasser wird zum Schluss mit Essigsäure 80%ig abgesäuert und getrocknet. Das Wollgewebe ist in einem vollen Blauton von ausgezeichneten Echtheitseigenschaften gefärbt.

Färbebeispiel 5

In 1000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

3 Teile des gemäss Beispiel 1 erhaltenen Farbstoffes werden in 100 Teilen Wasser heiss gelöst und dem obigen Färbebad zugegeben. Ein Zirkulationsfärbeapparat wird mit 100 Teilen vorgenetztem Kammzug in Wickelform beschickt und im Verlaufe von 30 Minuten die Temperatur des Bades von 50 auf 97-99° erhöht, und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut bei dieser Temperatur nachbehandelt. Nach gründlichem Spülen mit heissem und kaltem Wasser, Absäuern mit 1 Teil 80%iger Ameisensäure, Zentrifugieren und Trocknen erhält man ein dunkelblau gefärbtes Färbegut von sehr guter Nassechtheit sowie ausgezeichneter Lichtechtheit.

Färbebeispiel 6

In 1000 Teilen Wasser von 50° werden nacheinander 6 Teile 80%ige Essigsäure, 3 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 6 Teile Ammoniumsulfat gelöst.

3 Teile des gemäss Beispiel 1 erhaltenen Farbstoffes werden in 100 Teilen Wasser heiss gelöst und dem obigen Färbebad zugegeben. Ein Zirkulationsfärbeapparat wird mit 150 Teilen vorgenetzter loser Wolle beschickt und im Verlaufe von 30 Minuten die Temperatur der Flotte von 50° auf 97-99° erhöht, und anschliessend 90 Minuten kochend gefärbt. Der Farbstoff zieht fast vollkommen auf das Substrat auf. Nach Abkühlen der Flotte auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80%iger Ameisensäure, Zentrifugieren und Trocknen erhält man ein faseregal blau gefärbtes Substrat mit guter Nass- und Reibechtheit sowie ausgezeichneter Lichtechtheit.

Färbebeispiel 7

In 4000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

0,45 Teile des gemäss Beispiel 1 erhaltenen Farbstoffes und 0,30 Teile des gelben Farbstoffes der Formel

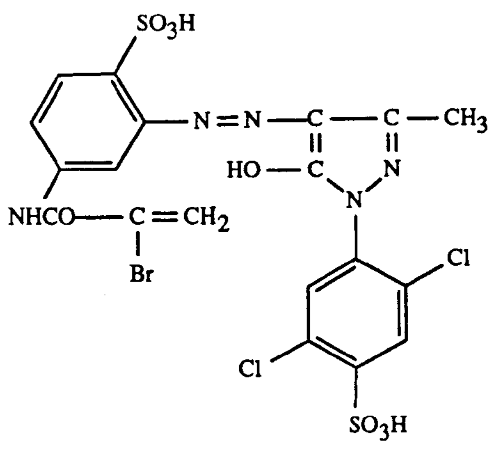

(104)

und 0,40 Teile des roten Farbstoffes der Formel

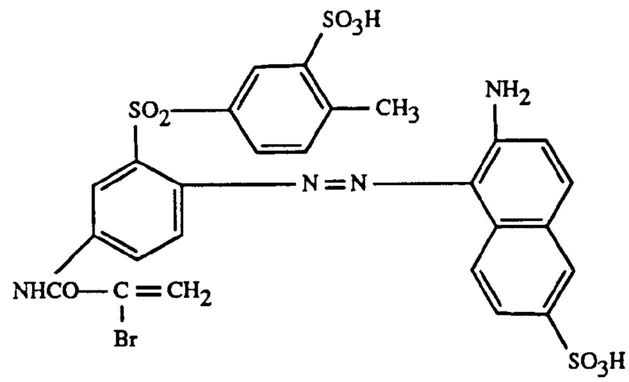

(105)

werden in 100 Teilen Wasser heiss gelöst und dem obigen Färbebad zugegeben. Dann wird mit 100 Teilen vorgenetztem Wollgewebe eingegangen und im Verlaufe von 30 Minuten die Temperatur des Bades von 50 auf 80° erhöht. Nach 20 Minuten Färben bei 80° wird zum Sieden erhitzt und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80%iger Ameisensäure, Zentrifugieren und Trocknen erhält man ein faseregales dunkelbraun gefärbtes Wollgewebe von sehr guter Nass- und Reibechtheit sowie ausgezeichneter Lichtechtheit.

Färbebeispiel 8

In 4000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

0,6 Teile des gemäss Beispiel 2 erhaltenen Farbstoffes und 0,09 Teile des gelben Farbstoffes der Formel

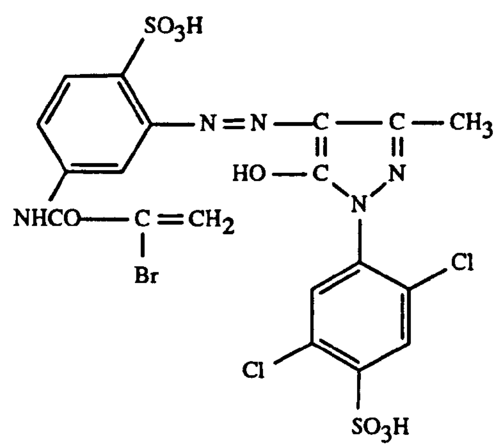

(104)

und 0,2 Teile des roten Farbstoffes der Formel

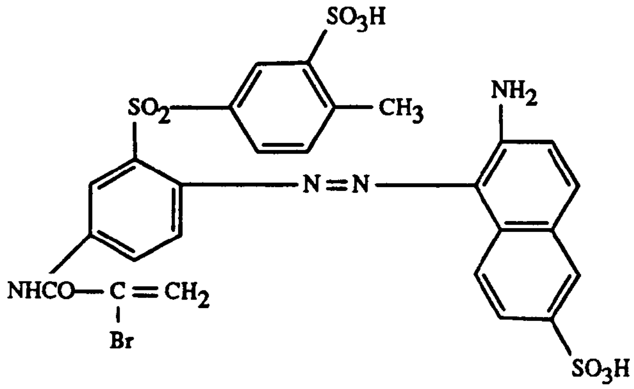

(105)

werden in 100 Teilen Wasser heiss gelöst und dem obigen Färbebad zugegeben. Ein Zirkulationsfärbeapparat wird mit 100 Teilen vorgenetztem Kammzug in Wickelform beschickt und im Verlaufe von 30 Minuten die Temperatur des Bades von 50 auf 97-99° erhöht und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80%iger Ameisensäure, Zentrifugieren und Trocknen erhält man ein grau gefärbtes Färbegut von sehr guter Nass- und Reibechtheit sowie ausgezeichneter Lichtechtheit.

## Patentansprüche

**Patentansprüche für folgende Vertragsstaaten : BE, CH, DE, FR, GB, IT, LI**

1. Faserreaktive Formazanfarbstoffe der Formel

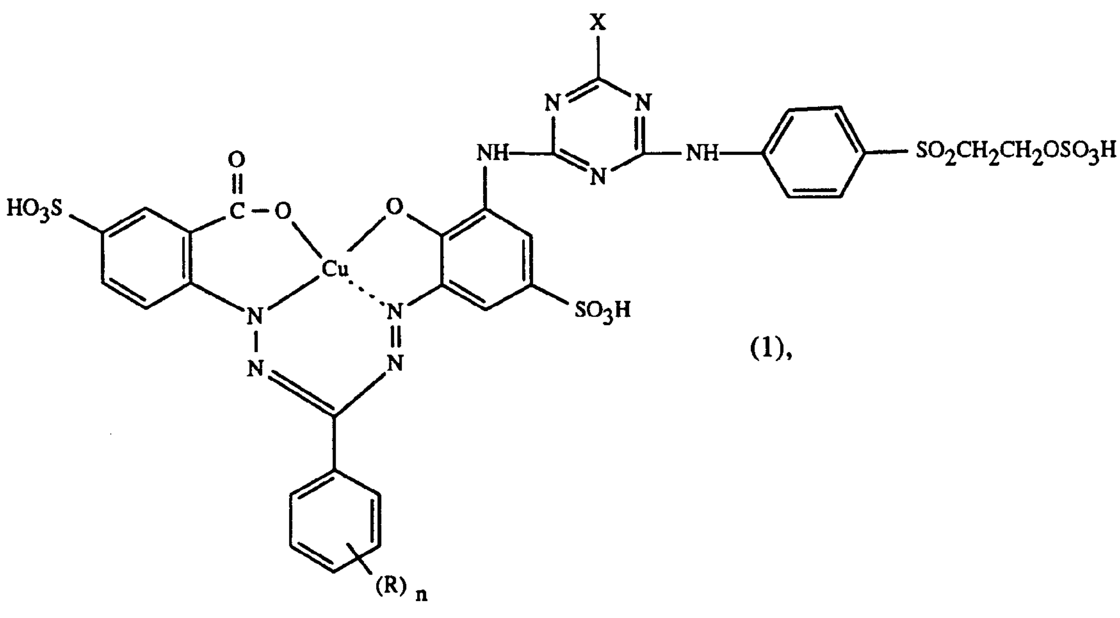

(1),

worin R $C_1$-$C_4$-Alkyl, $C_1$-$C_4$-Alkoxy, Halogen, Cyan oder Nitro, X Fluor oder Chlor und n die Zahl 0, 1 oder 2 ist.

2. Faserreaktive Formazanfarbstoffe gemäss Anspruch 1, dadurch gekennzeichnet, dass n die Zahl 0 ist.

3. Faserreaktive Formazanfarbstoffe gemäss einem der Ansprüche 1 und 2, dadurch gekennzeichnet, dass X Chlor bedeutet.

4. Verfahren zur Herstellung von faserreaktiven Formazanfarbstoffen gemäss Anspruch 1, dadurch gekennzeichnet, dass man eine Verbindung der Formel

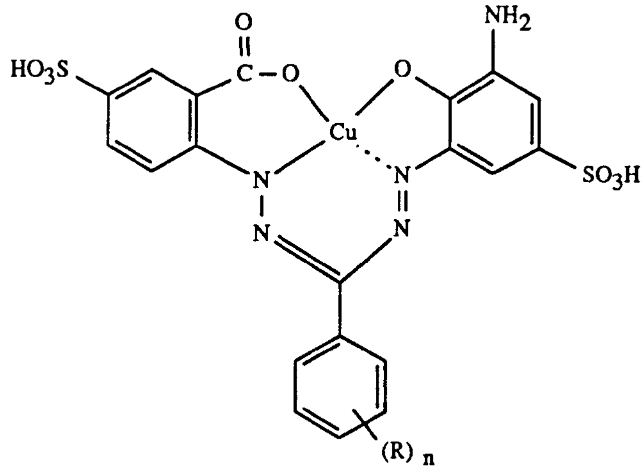

(2),

worin R und n die in Anspruch 1 angegebenen Bedeutungen haben, mit einer den Rest der Formel

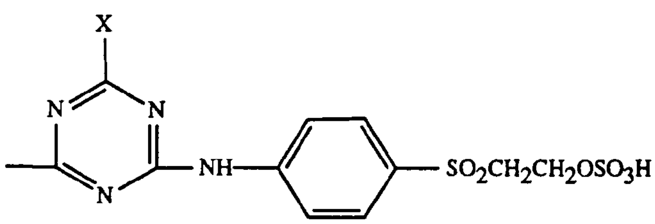

(3)

einführenden Verbindung, worin X die in Anspruch 1 angegebenen Bedeutungen hat, umsetzt, oder eine Verbindung der Formel (2) zunächst mit einer Verbindung der Formel

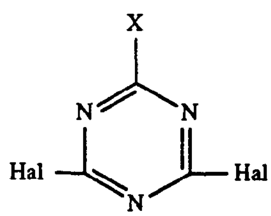

(4),

worin X Fluor oder Chlor und Hal je Halogen, insbesondere Fluor oder Chlor, bedeutet, kondensiert und das Kondensationsprodukt anschliessend mit einer den Rest der Formel

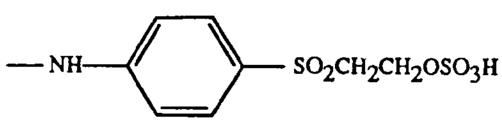

(5),

einführenden Verbindung umsetzt.

5. Verwendung der faserreaktiven Formazanfarbstoffe gemäss einem der Ansprüche 1 bis 3, bzw. der gemäss Anspruch 4 erhaltenen faserreaktiven Formazanfarbstoffe zum Färben und Bedrucken.

6. Verwendung gemäss Anspruch 5 zum Färben und Bedrucken von Papier, Leder und hydroxylgruppenhaltigen oder stickstoffhaltigen Textilfasermaterialien.

7. Verfahren zum Trichromie-Färben oder -Bedrucken von natürlichen und synthetischen Polyamidfasermaterialien mit Farbstoffmischungen, dadurch gekennzeichnet, dass man einen faserreaktiven Formazanfarbstoff der Formel

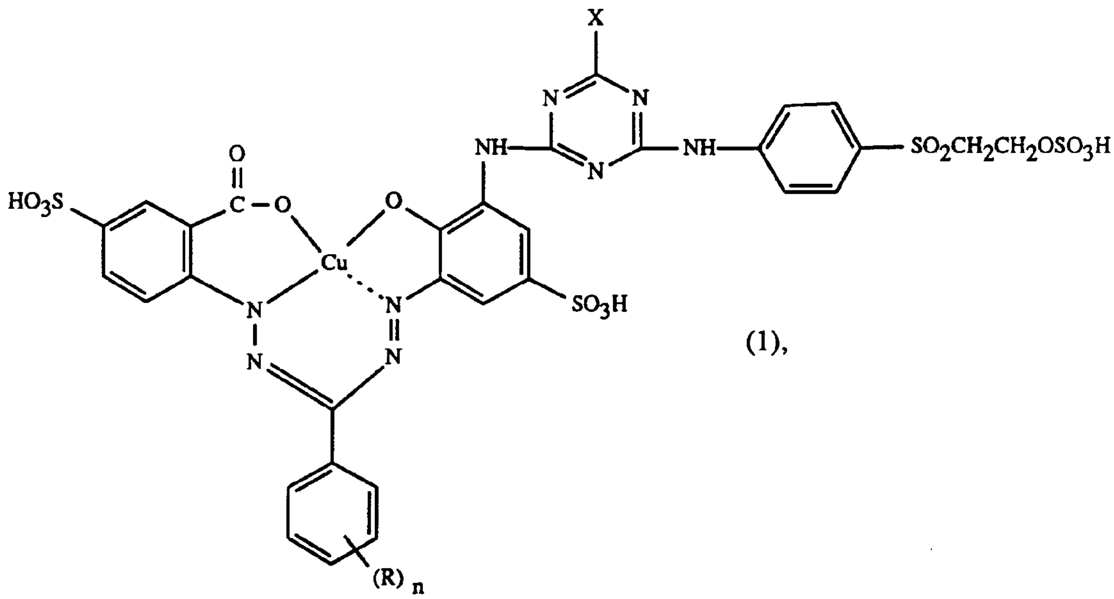

(1),

worin R $C_1$-$C_4$-Alkyl, $C_1$-$C_4$-Alkoxy, Halogen, Cyan oder Nitro, X Fluor oder Chlor und n die Zahl 0, 1 oder 2 ist, zusammen mit einem faserreaktiven, sulfogruppenhaltigen rotfärbenden Farbstoff und einem faserreaktiven, sulfogruppenhaltigen gelb- oder orangefärbenden Farbstoff verwendet.

8. Verfahren gemäss Anspruch 7, dadurch gekennzeichnet, dass man als faserreaktive, sulfogruppenhaltige gelb- oder orange- und rotfärbende Farbstoffe Azofarbstoffe verwendet.

9. Verfahren gemäss einem der Ansprüche 7 und 8, dadurch gekennzeichnet, dass die gelb- oder orange- und rotfärbenden Farbstoffe als faserreaktive Gruppe jeweils eine Halogentriazin-, Halogenpyrimidin-Gruppe oder eine Gruppe der aliphatischen Reihe enthalten.

10. Verfahren gemäss einem der Ansprüche 7 bis 9, dadurch gekennzeichnet, dass die gelb- oder orange- und rotfärbenden Farbstoffe als faserreaktive Gruppe Difluorchlorpyrimidinyl, insbesondere 2,4-Difluor-5-chlorpyrimidinyl, oder α,β-Dihalogenpropionyl, insbesondere α,β-Dibrompropionyl, oder α-Halogenacryloyl, insbesondere α-Bromacryloyl, enthalten.

11. Verfahren gemäss einem der Ansprüche 7 bis 10, dadurch gekennzeichnet, dass zum Trichromie-Färben oder -Bedrucken natürliches Polyamidmaterial, insbesondere Wolle, verwendet wird.

12. Trichromie-Farbstoffmischung, dadurch gekennzeichnet, dass sie einen faserreaktiven Formazanfarbstoff der Formel

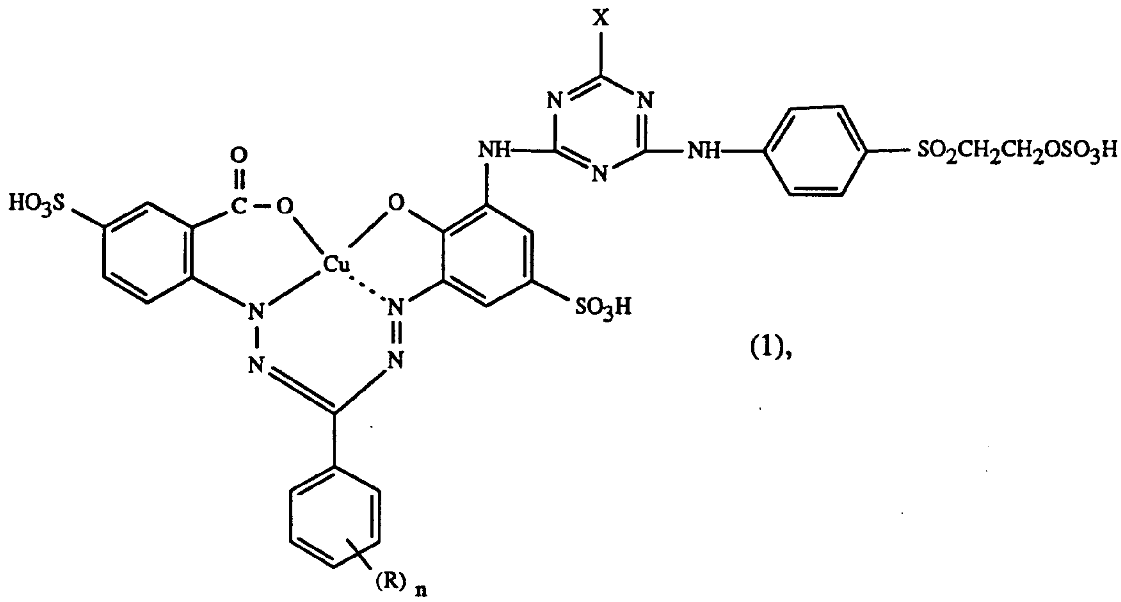

(1),

worin R $C_1$-$C_4$-Alkyl, $C_1$-$C_4$-Alkoxy, Halogen, Cyan oder Nitro, X Fluor oder Chlor und n die Zahl 0, 1 oder 2 ist, zusammen mit einem faserreaktiven, sulfogruppenhaltigen rotfärbenden Farbstoff und einem faserreaktiven, sulfogruppenhaltigen gelb- oder orangefärbenden Farbstoff enthält.

**Patentansprüche für folgenden Vertragsstaat : ES**

1. Verfahren zur Herstellung von faserreaktiven Formazanfarbstoffen der Formel

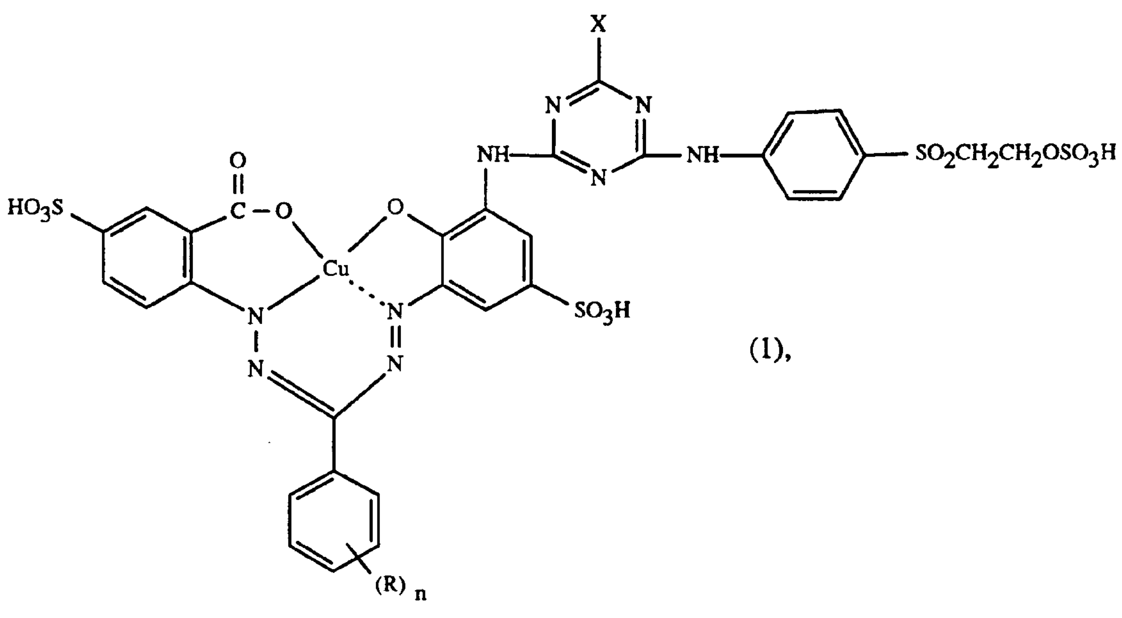

(1),

worin R $C_1$-$C_4$-Alkyl, $C_1$-$C_4$-Alkoxy, Halogen, Cyan oder Nitro, X Fluor oder Chlor und n die Zahl 0, 1 oder 2 ist, dadurch gekennzeichnet, dass man eine Verbindung der Formel

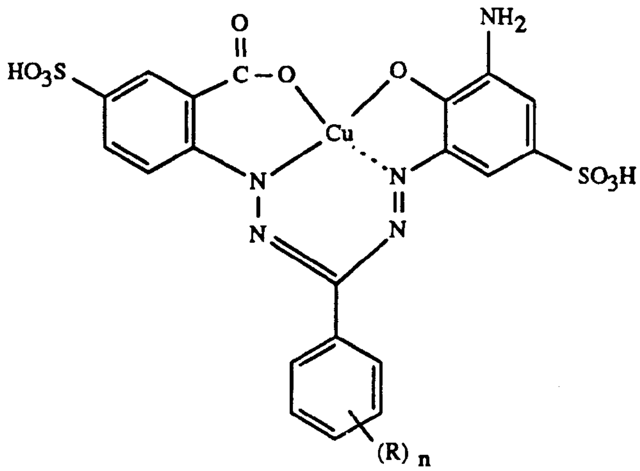

(2),

worin R und n die unter Formel (1) angegebenen Bedeutungen haben, mit einer den Rest der Formel

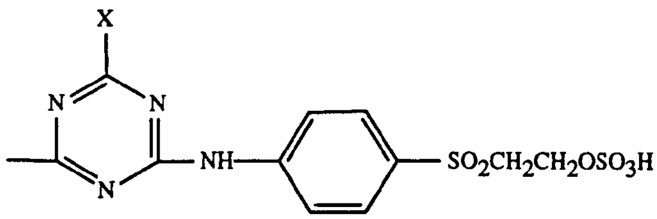

(3)

einführenden Verbindung, worin X die unter Formel (1) angegebenen Bedeutungen hat, umsetzt, oder eine Verbindung der Formel (2) zunächst mit einer Verbindung der Formel

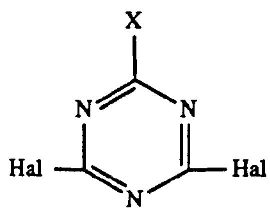

(4),

worin X Fluor oder Chlor und Hal je Halogen, insbesondere Fluor oder Chlor, bedeutet, kondensiert und das Kondensationsprodukt anschliessend mit einer den Rest der Formel

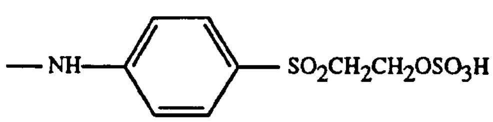

(5),

einführenden Verbindung umsetzt.

2. Verfahren gemäss Anspruch 1, dadurch gekennzeichnet, dass man eine Verbindung der Formel (2) verwendet, worin n die Zahl 0 ist.

3. Verfahren gemäss einem der Ansprüche 1 und 2, dadurch gekennzeichnet, dass man eine Verbindung der Formel (3) oder eine Verbindung der Formel (4) verwendet, worin X Chlor bedeutet.

4. Verwendung der gemäss einem der Ansprüche 1 bis 3 erhaltenen faserreaktiven Formazanfarbstoffe zum Färben und Bedrucken.

5. Verwendung gemäss Anspruch 4 zum Färben und Bedrucken von Papier, Leder und hydroxylgruppenhaltigen oder stickstoffhaltigen Textilfasermaterialien.

6. Verfahren zum Trichromie-Färben oder -Bedrucken von natürlichen und synthetischen Polyamidfasermaterialien mit Farbstoffmischungen, dadurch gekennzeichnet, dass man einen gemäss Anspruch 1 erhaltenen faserreaktiven Formazanfarbstoff der Formel

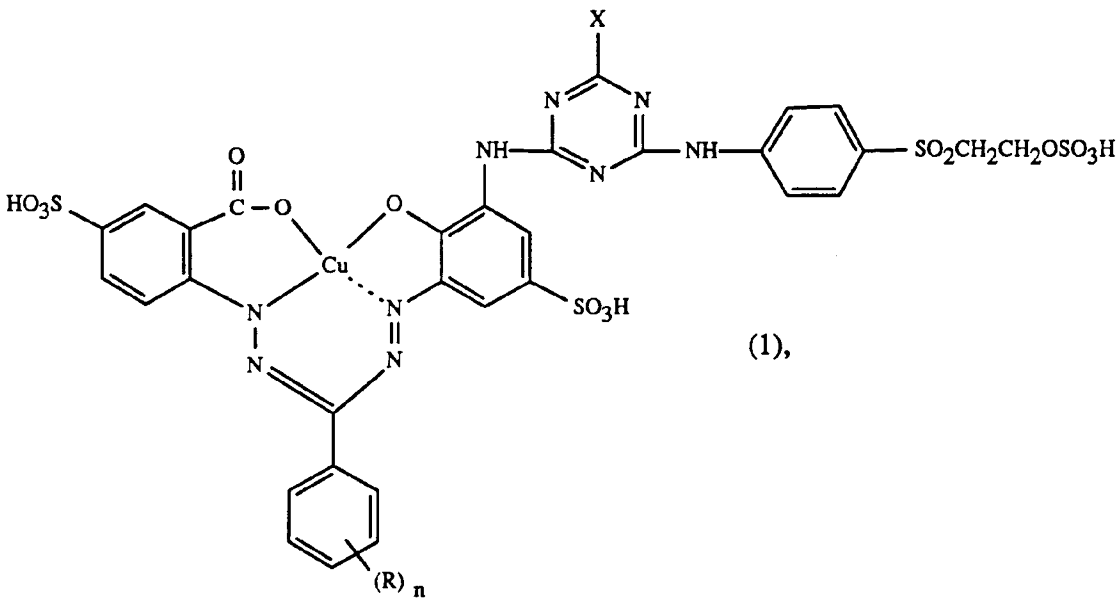

(1),

worin R $C_1$-$C_4$-Alkyl, $C_1$-$C_4$-Alkoxy, Halogen, Cyan oder Nitro, X Fluor oder Chlor und n die Zahl 0, 1 oder 2 ist, zusammen mit einem faserreaktiven, sulfogruppenhaltigen rotfärbenden Farbstoff und einem faserreaktiven, sulfogruppenhaltigen gelb- oder orangefärbenden Farbstoff verwendet.

7. Verfahren gemäss Anspruch 6, dadurch gekennzeichnet, dass man als faserreaktive, sulfogruppenhaltige gelb- oder orange- und rotfärbende Farbstoffe Azofarbstoffe verwendet.

8. Verfahren gemäss einem der Ansprüche 6 und 7, dadurch gekennzeichnet, dass die gelb- oder orange- und rotfärbenden Farbstoffe als faserreaktive Gruppe jeweils eine Halogen triazin-, Halogenpyrimidin-Gruppe oder eine Gruppe der aliphatischen Reihe enthalten.

9. Verfahren gemäss einem der Ansprüche 6 bis 8, dadurch gekennzeichnet, dass die gelb- oder orange- und rotfärbenden Farbstoffe als faserreaktive Gruppe Difluorchlorpyrimidinyl, insbesondere 2,4-Difluor-5-chlorpyrimidinyl, oder $\alpha,\beta$-Dihalogenpropionyl, insbesondere $\alpha,\beta$-Dibrompropionyl, oder $\alpha$-Halogenacryloyl, insbesondere $\alpha$-Bromacryloyl, enthalten.

10. Verfahren gemäss einem der Ansprüche 6 bis 9, dadurch gekennzeichnet, dass zum Trichromie-Färben oder -Bedrucken natürliches Polyamidmaterial, insbesondere Wolle, verwendet wird.

11. Verfahren zur Herstellung von Trichromie-Farbstoffmischungen, dadurch gekennzeichnet, dass man einen gemäss Anspruch 1 erhaltenen faserreaktiven Formazanfarbstoff der Formel

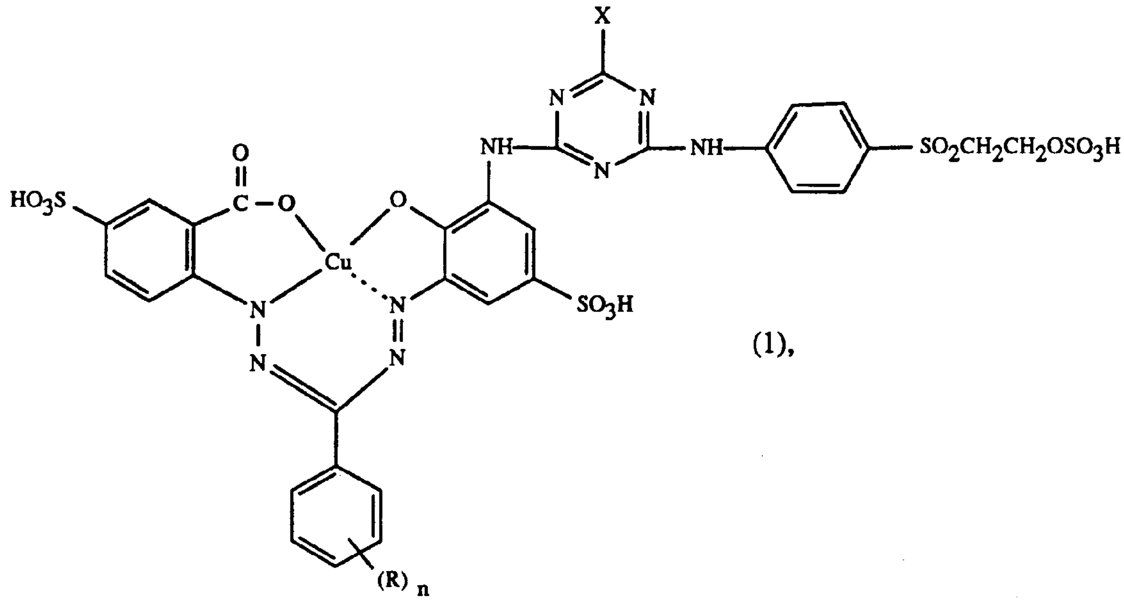

(1),

worin R $C_1$-$C_4$-Alkyl, $C_1$-$C_4$-Alkoxy, Halogen, Cyan oder Nitro, X Fluor oder Chlor und n die Zahl 0, 1 oder 2 ist, mit einem faserreaktiven, sulfogruppenhaltigen rotfärbenden Farbstoff und einem faserreaktiven, sulfogruppenhaltigen gelb- oder orangefärbenden Farbstoff mischt.

## Claims

### Claims for the following Contracting States : BE, CH, DE, FR, GB, IT, LI

1. A fibre-reactive formazan dye of the formula

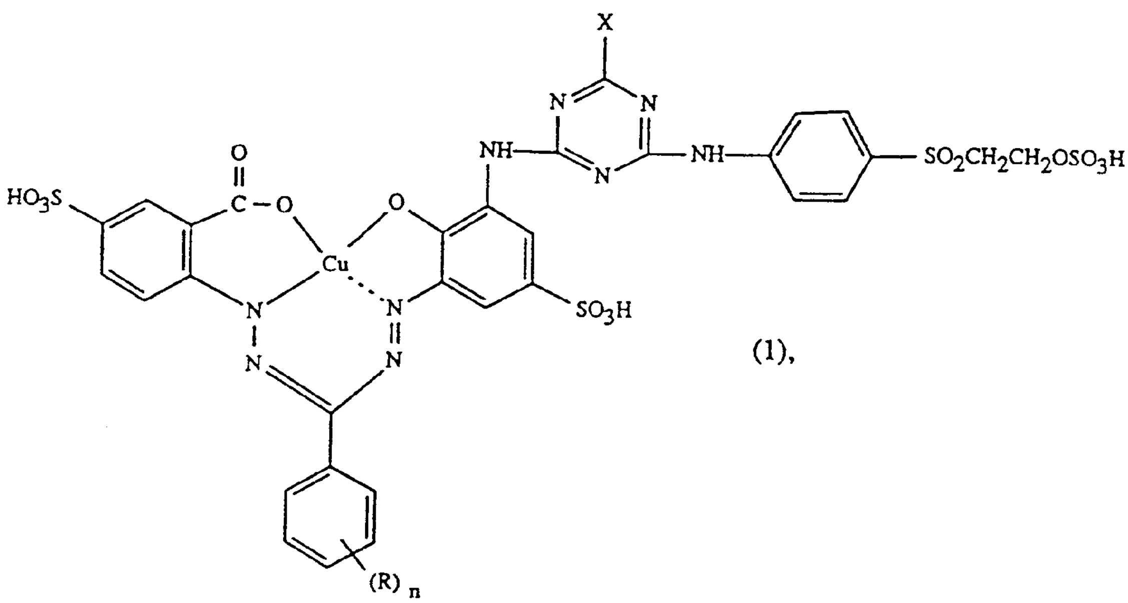

(1),

in which R is $C_1$-$C_4$alkyl, $C_1$-$C_4$alkoxy, halogen, cyano or nitro, X is fluorine or chlorine, and n is the number 0, 1 or 2.

2. A fibre-reactive formazan dye according to claim 1, wherein n is the number 0.

3. A fibre-reactive formazan dye according to any one of claims 1 to 2, in which X is chlorine.

4. A process for the preparation of a fibre-reactive formazan dye according to claim 1, which comprises reacting a compound of the formula

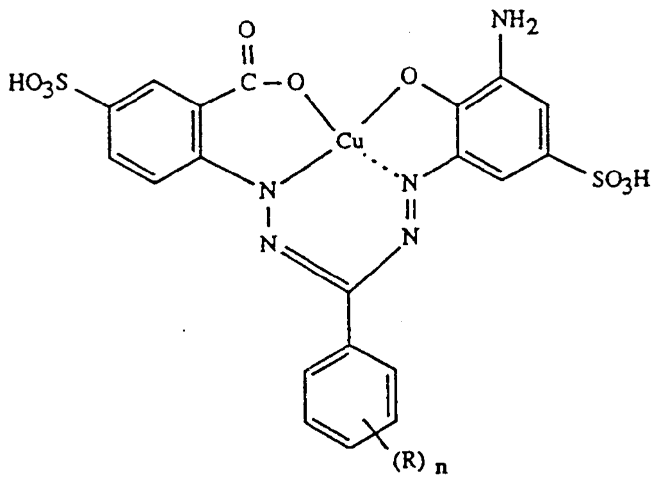

(2),

in which R and n are as defined in claim 1 with a compound which introduces the radical of the formula

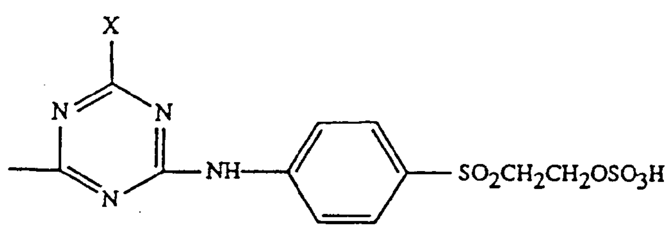

(3)

in which X is as defined in claim 1, or condensing a compound of the formula (2) first with a compound of the formula

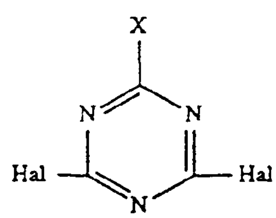

(4),

in which X is fluorine or chlorine and Hal is in each case halogen, in particular fluorine or chlorine, and then reacting the condensation product with a compound which introduces the radical of the formula

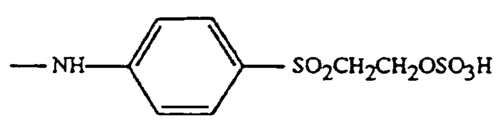

(5),

5. Use of a fibre-reactive formazan dye according to any one of claims 1 to 3 or a fibre-reactive formazan dye obtained according to claim 4 for dyeing and printing.

6. Use according to claim 5 for dyeing and printing paper, leather and hydroxyl-containing or nitrogen-containing textile fibre materials.

7. A process for the trichromic dyeing or printing of natural and synthetic polyamide fibre materials with dye mixtures, wherein a fibre-reactive formazan dye of the formula

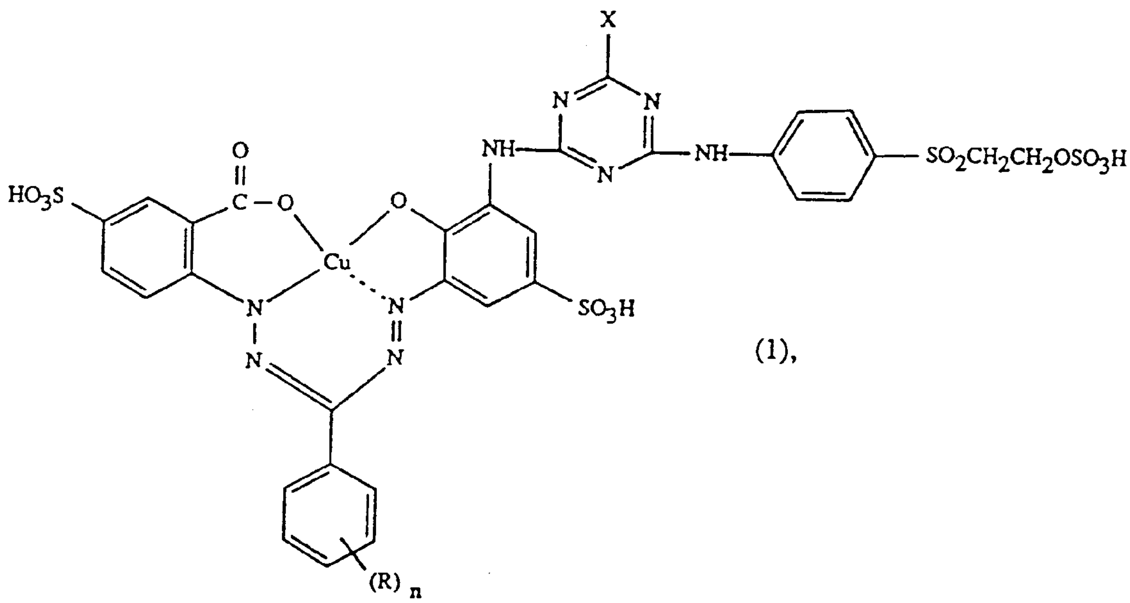

(1),

in which R is $C_1$-$C_4$alkyl, $C_1$-$C_4$alkoxy, halogen, cyano or nitro, X is fluorine or chlorine, and n is the number 0, 1 or 2, is used together with a fibre-reactive sulfo-containing red dye and a fibre-reactive sulfo-containing yellow or orange dye.

8. A process according to claim 7, wherein azo dyes are used as fibre-reactive sulfo-containing yellow or orange and red dyes.

9. A process according to either of claims 7 and 8, wherein the yellow or orange and red dyes contain, as fibre-reactive group, a halogenotriazine, halogenopyrimidine group or a group of the aliphatic series, respectively.

10. A process according to any one of claims 7 to 9, wherein the yellow or orange and red dyes contain, as fibre-reactive group, difluorochloropyrimidinyl, in particular 2,4-difluoro-5-chloropyrimidinyl, or α,β-dihalogenopropionyl, in particular α,β-dibromopropionyl, or α-halogenoacryloyl, in particular α-bromoacryloyl.

11. A process according to any one of claims 7 to 10, wherein natural polyamide material, in particular wool, is used for the trichromic dyeing or printing.

12. A trichromic dye mixture, which contains a fibre-reactive formazan dye of the formula

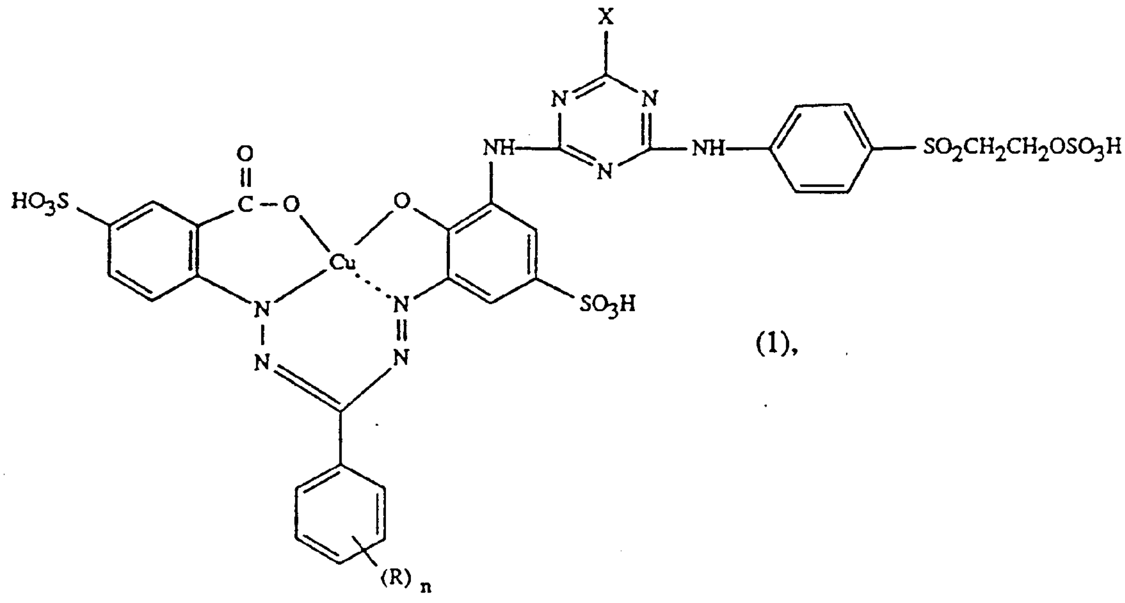

(1),

in which R is $C_1$-$C_4$alkyl, $C_1$-$C_4$alkoxy, halogen, cyano or nitro, X is fluorine or chlorine, and n is the number 0, 1 or 2 together with a fibre-reactive sulfo-containing red dye and a fibre-reactive sulfur-containing yellow or orange dye.

**Claims for the following Contracting State : ES**

1. A process for the preparation of a fibre-reactive formazan dye of the formula

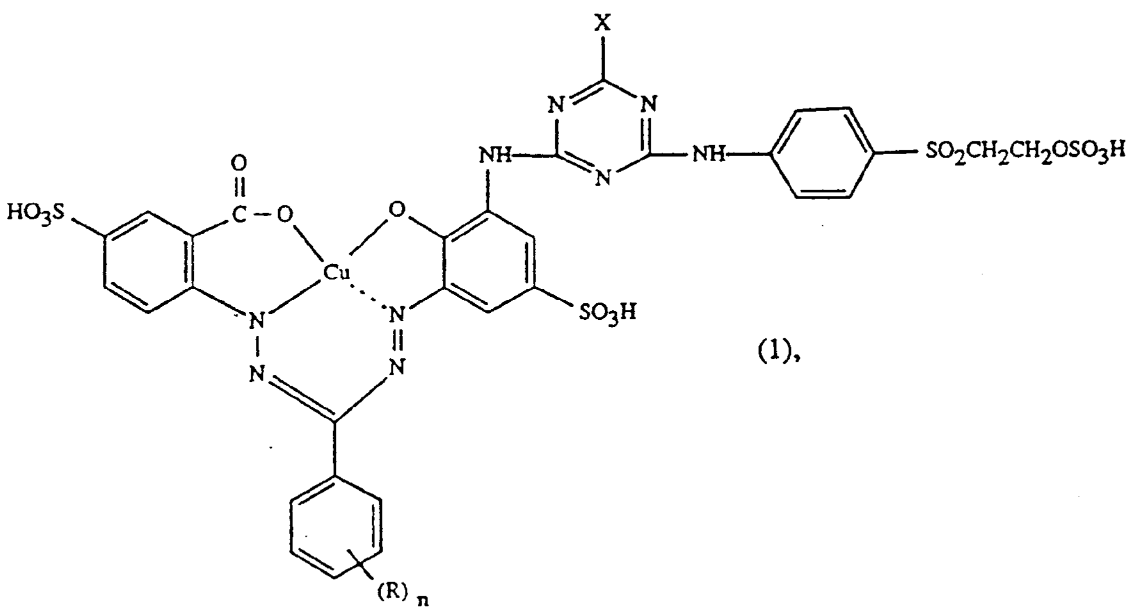

(1),

in which R is $C_1$-$C_4$alkyl, $C_1$-$C_4$alkoxy, halogen, cyano or nitro, X is fluorine or chlorine, and n is the number 0, 1 or 2, which comprises reacting a compound of the formula

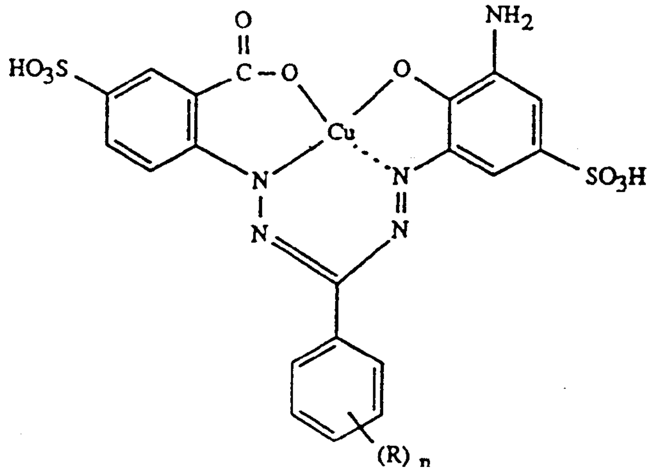

(2),

in which R and n are as defined under formula (1), with a compound which introduces the radical of the formula

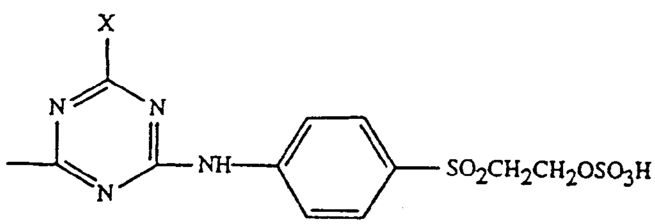

(3)

in which X is as defined under formula (1), or condensing a compound of the formula (2) first with a compound of the formula

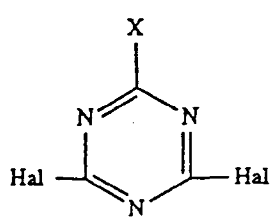

(4),

in which X is fluorine or chlorine and Hal is in each case halogen, in particular fluorine or chlorine, and then reacting the condensation product with a compound which introduces the radical of the formula

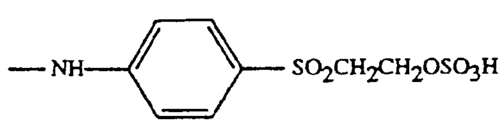

(5),

2. The process according to claim 1, which comprises using a compound of the formula (2) in which n is the number 0.

3. The process according to either of claims 1 and 2, which comprises using a compound of the formula (3) or a compound of the formula (4) in which X is chlorine.

4. Use of a fibre-reactive formazan dye obtained according to any one of claims 1 to 3 for dyeing and printing.

5. Use according to claim 4 for dyeing and printing paper, leather and hydroxyl-containing or nitrogen-containing textile fibre materials.

6. A process for the trichromic dyeing or printing of natural and synthetic polyamide fibre materials with dye mixtures, wherein a fibre-reactive formazan dye, obtained according to claim 1, of the formula

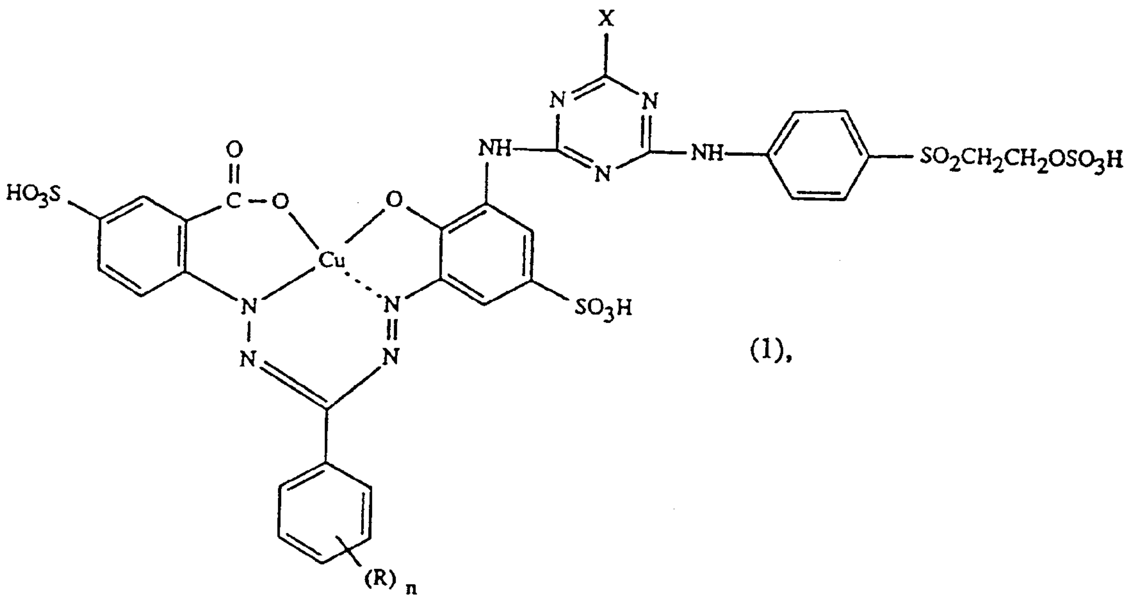

(1),

in which R is $C_1$-$C_4$alkyl, $C_1$-$C_4$alkoxy, halogen, cyano or nitro, X is fluorine or chlorine, and n is the number 0, 1 or 2, is used together with a fibre-reactive sulfo-containing red dye and a fibre-reactive sulfo-containing yellow or orange dye.

7. A process according to claim 6, wherein azo dyes are used as fibre-reactive sulfo-containing yellow or orange and red dyes.

8. A process according to either of claims 6 and 7, wherein the yellow or orange and red dyes contain, as fibre-reactive group, a halogenotriazine, halogenopyrimidine group or a group of the aliphatic series, respectively.

9. A process according to any one of claims 6 to 8, wherein the yellow or orange and red dyes contain, as fibre-reactive group, difluorochloropyrimidinyl, in particular 2,4-difluoro-5-chloropyrimidinyl, or α,β-dihalogenopropionyl, in particular α,β-dibromopropionyl, or α-halogenoacryloyl, in particular α-bromoacryloyl.

10. A process according to any one of claims 6 to 9, wherein natural polyamide material, in particular wool, is used for the trichromic dyeing or printing.

11. A process for producing a trichromic dye mixture, which comprises mixing a fibre-reactive formazan dye, obtained according to claim 1, of the formula

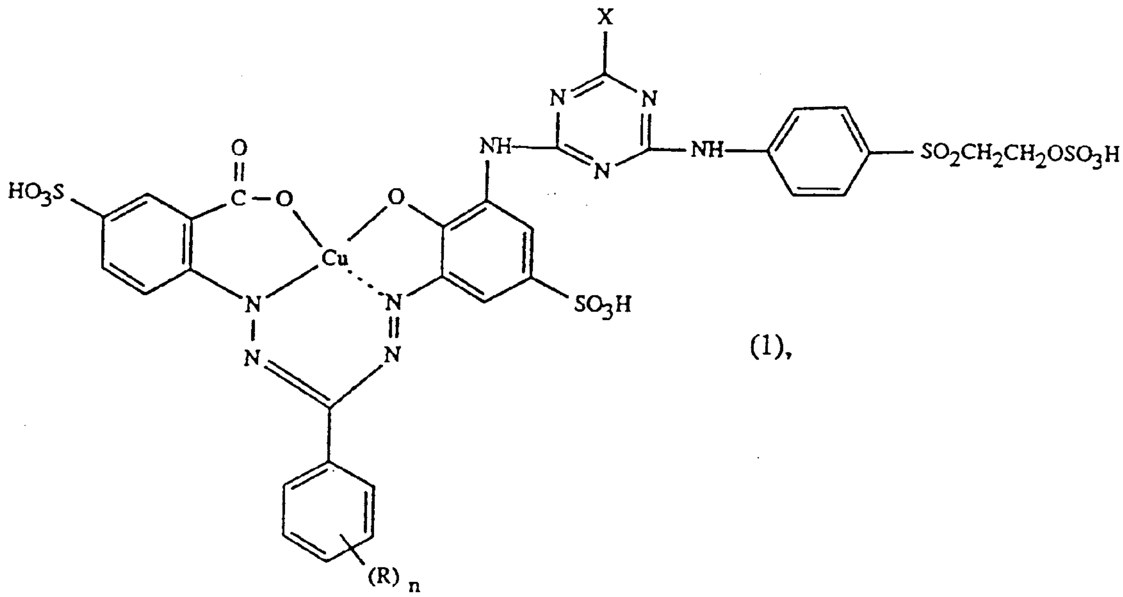

(1),

in which R is $C_1$-$C_4$alkyl, $C_1$-$C_4$alkoxy, halogen, cyano or nitro, X is fluorine or chlorine, and n is the number 0, 1 or 2 with a fibre-reactive sulfo-containing red dye and a fibre-reactive sulfur-containing yellow or orange dye.

## Revendications

### Revendications pour les Etats contractants suivants : BE, CH, DE, FR, GB, IT, LI

1. Colorants formazan réactifs vis-à-vis des fibres de la formule

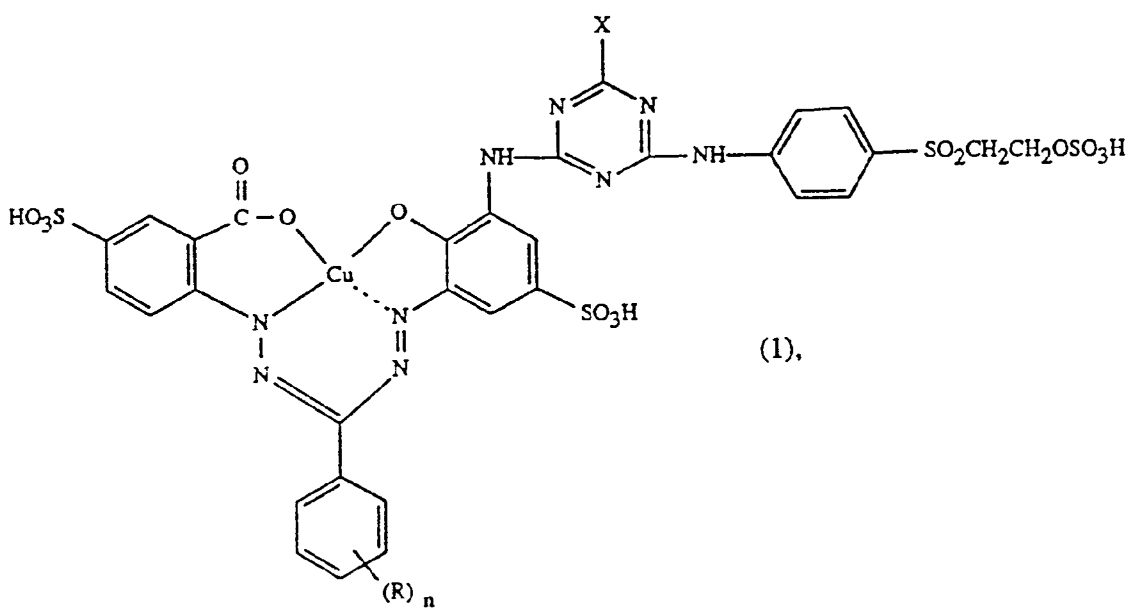

(1),

dans laquelle R représente un groupe alkyle en $C_1$-$C_4$, alkoxy en $C_1$-$C_4$, cyano, nitro, un atome halogène, X un atome de fluor ou de chlore et dans laquelle n prend la valeur de 0, 1 ou 2.

2. Colorants formazan réactifs vis-à-vis des fibres conformes à la revendication 1 caractérisés en ce que

n prend la valeur de 0.

3. Colorants formazan réactifs vis-à-vis des fibres conformes à une des revendications 1 ou 2 caractérisés en ce que X représente un chlore.

4. Procédés de préparation de colorants formazan réactifs vis-à-vis des fibres conformes à la revendication 1 caractérisés en ce que l'on fait réagir un composé de formule

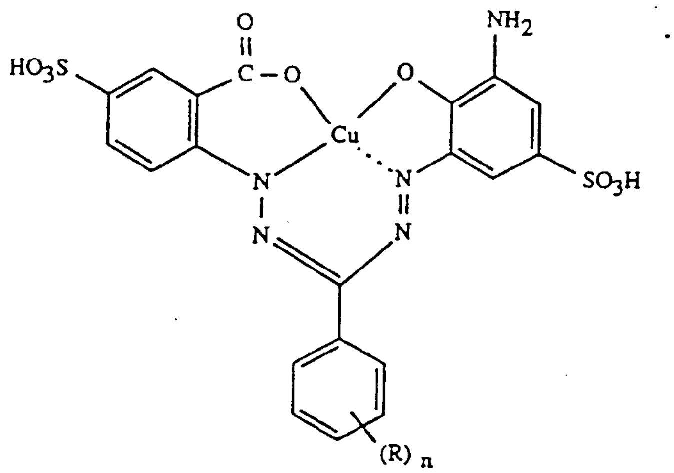

(2),

dans laquelle R et n représentent les termes indiqués dans la revendication 1, avec un composé introduisant un résidu de formule

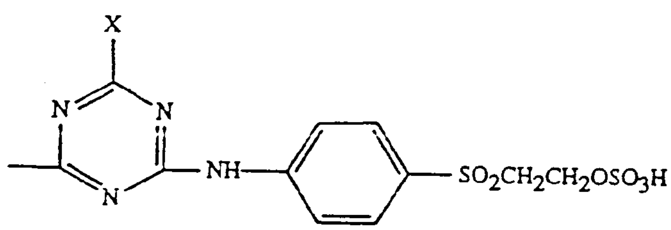

(3)

dans laquelle X représente les termes indiqués dans la revendication 1, ou caractérisés en ce que l'on condense d'abord un composé de formule (2) d'abord avec un composé de formule

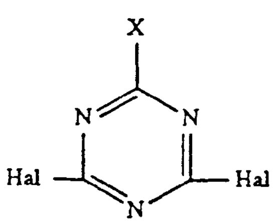

(4),

dans laquelle X représente un atome de fluor ou de chlore et chaque Hal un atome d'halogène, en particulier un atome de fluor ou de chlore, et que l'on fait ensuite réagir le produit de condensation avec un composé introduisant le résidu de formule

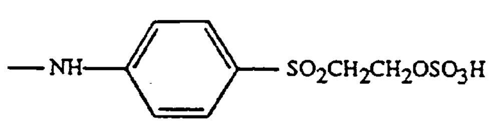

(5),

5. Utilisation des colorants formazan réactifs vis-à-vis des fibres conformes à une des revendications 1 à

3, ou des colorants formazan réactifs vis-à-vis des fibres obtenus conformément à la revendication 4, pour la teinture et l'impression.

6. Utilisation conforme à la revendication 5 pour la teinture et l'impression de papier, de cuir, de matériaux textiles fibreux contenant des groupes hydroxyle ou des atomes d'azote.

7. Procédés de teinture et d'impression en trichromie de matériaux fibreux synthétiques ou naturels en polyamide caractérisés en ce que l'on utilise un colorant formazan réactif vis-à-vis des fibres de formule

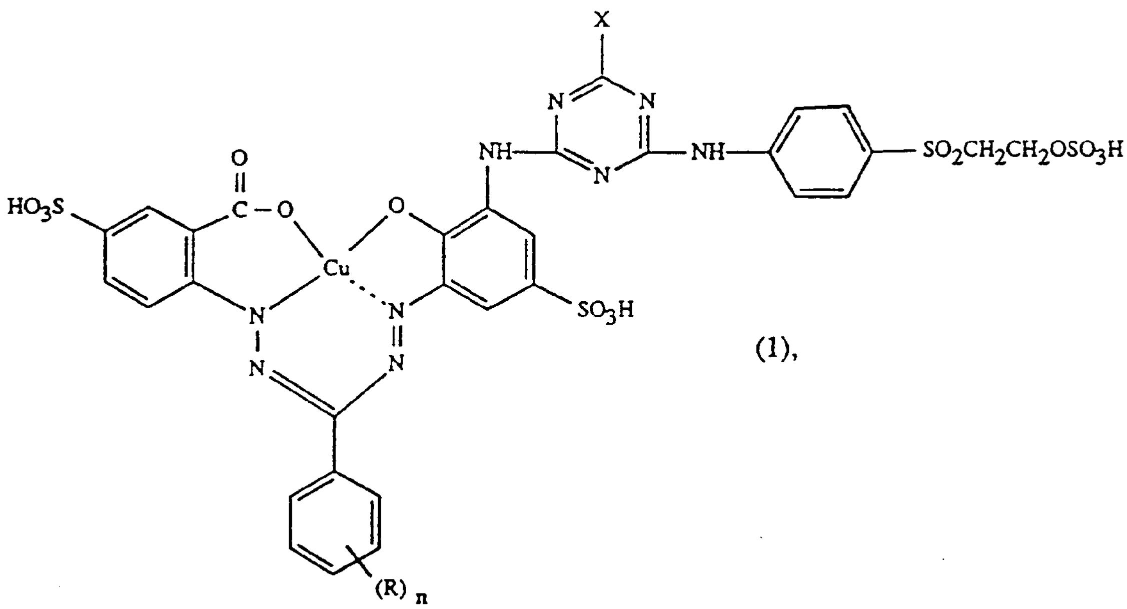

(1),

dans laquelle R représente un groupe alkyle en $C_1$-$C_4$, alkoxy en $C_1$-$C_4$, cyano, nitro, un atome d'halogène, X un atome de fluor ou de chlore et dans laquelle n prend la valeur de 0, 1 ou 2, ensemble avec un colorant rouge contenant des groupes sulfo réactif vis-à-vis des fibres et avec un colorant jaune-orangé contenant des groupes sulfo réactif vis-à-vis des fibres.

8. Procédés conformes à la revendication 7 caractérisés en ce que l'on utilise comme colorants réactifs vis-à-vis des fibres de couleur jaune-orangé et rouge contenant des groupes sulfo, des colorants azoïques.

9. Procédés conformes à une des revendications 7 ou 8 caractérisés en ce que les colorants de couleur jaune-orangé et rouge contiennent comme groupe réactif vis-à-vis des fibres une fonction triazine halogénée ou pyrimidine halogénée, ou un groupe de la série aliphatique.

10. Procédés conformes à une des revendications 7 à 9 caractérisés en ce que la fonction réactive vis-à-vis des fibres des colorants de couleur jaune-orangé et rouge est le difluorochloropyrimidinyle, en particulier le 2,4-difluoro-5-chloropyrimidinyle, ou l'α,β-dihalogénopropionyle, en particulier l'α,β-dibromopropionyle, ou l'α-halogénoacryloyle, en particulier l'α-bromoacryloyle.

11. Procédés conformes à une des revendications 7 à 10 caractérisés en ce que l'on utilise pour la teinture ou l'impression en trichromie un matériau naturel en polyamide, en particulier de la laine.

12. Un mélange de colorants trichrome contenant un colorant formazan de formule

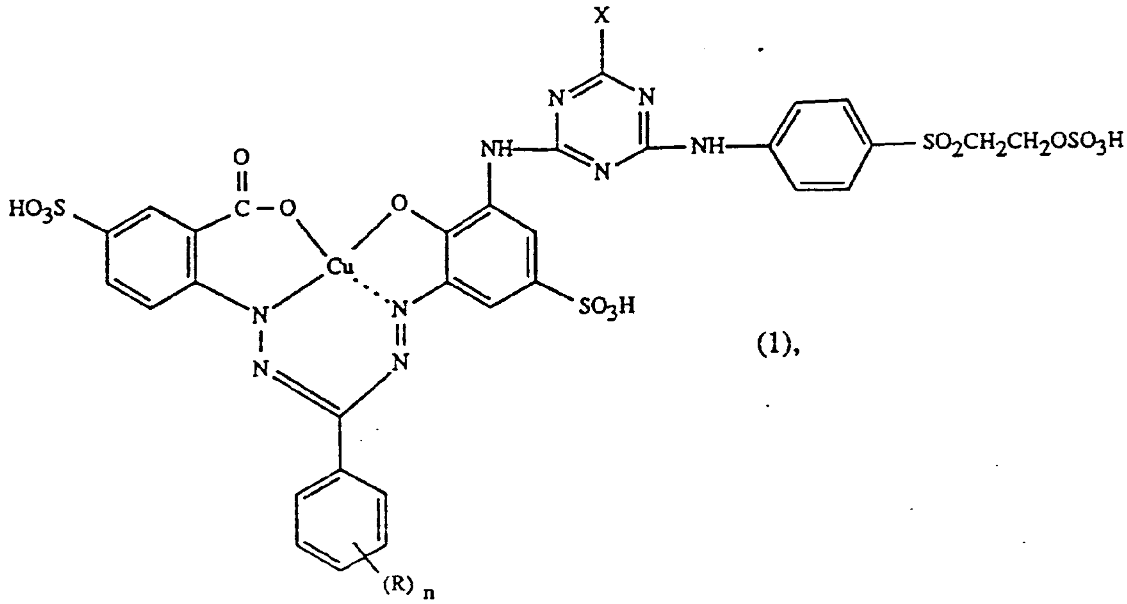

(1),

dans laquelle R représente un groupe alkyle en $C_1$-$C_4$, alkoxy en $C_1$-$C_4$, cyano ou nitro, un atome d'halogène, dans laquelle X représente un atome de fluor ou de chlore et dans laquelle n prend la valeur de 0, 1 ou 2, ensemble avec un colorant rouge contenant des groupes sulfo et réactif vis-à-vis des fibres et avec un colorant jaune-orangé contenant des groupes sulfo et réactif vis-à-vis des fibres.

**Revendications pour l'Etat contractant suivant : ES**

1. Procédés de préparation de colorants formazan réactifs vis-à-vis des fibres de formule

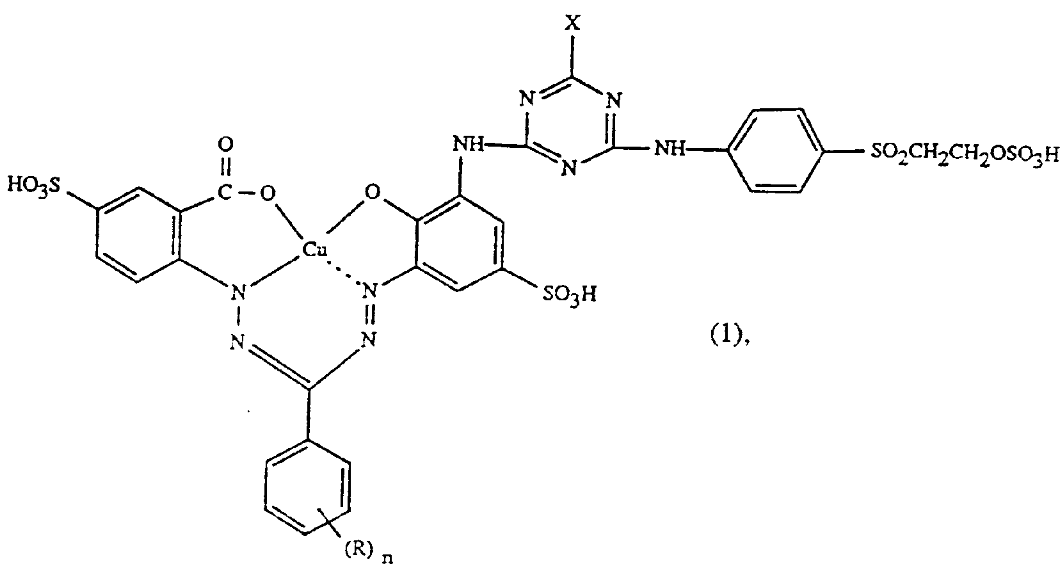

(1),

dans laquelle R représente un groupe alkyle en $C_1$-$C_4$ alkoxy en $C_1$-$C_4$ cyano ou nitro ou un atome d'halogène, X un atome de fluor ou de chlore et dans laquelle n prend la valeur de 0, 1 ou 2, caractérisés en ce que l'on fait réagir un composé de formule

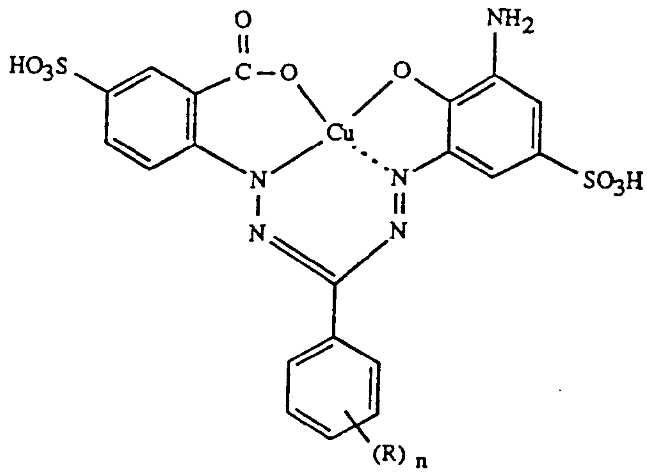

(2),

dans laquelle R et n représentent les termes indiqués pour la formule (1), avec un composé introduisant un résidu de formule

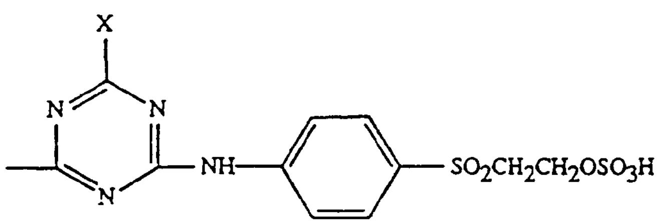

(3)

dans laquelle X représente les termes indiqués pour la formule (1), ou que l'on condense d'abord un composé de formule (2) avec un composé de la formule

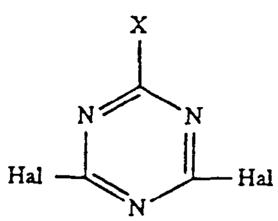

(4),

dans laquelle X représente un atome de fluor ou de chlore et chaque Hal un atome d'halogène, en particulier un atome de fluor ou de chlore, et que l'on fait réagir ensuite le produit de condensation avec un composé introduisant le résidu de formule

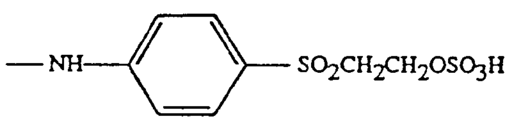

(5),

2. Procédés conformes à la revendication 1 caractérisés en ce que l'on utilise un composé de formule (2) dans laquelle n prend la valeur 0.

3. Procédés conformes à une des revendications 1 ou 2 caractérisés en ce que l'on utilise un composé de formule (3) ou de la formule (4) dans laquelle X représente un atome de chlore.

4. Utilisation des colorants formazan réactifs,vis-à-vis des fibres obtenus conformément à une des revendications 1 à 3 pour la teinture et l'impression.

5. Utilisation conforme à la revendication 4 pour la teinture et l'impression de papier, de cuir, de matériaux textiles fibreux contenant des groupes hydroxyle ou des atomes d'azote.

6. Procédés pour la teinture et l'impression en trichromie de matériaux fibreux synthétiques ou naturels en polyamide caractérisés en ce que l'on utilise un colorant formazan réactif vis-à-vis des fibres obtenu conformément à la revendication 1 de formule

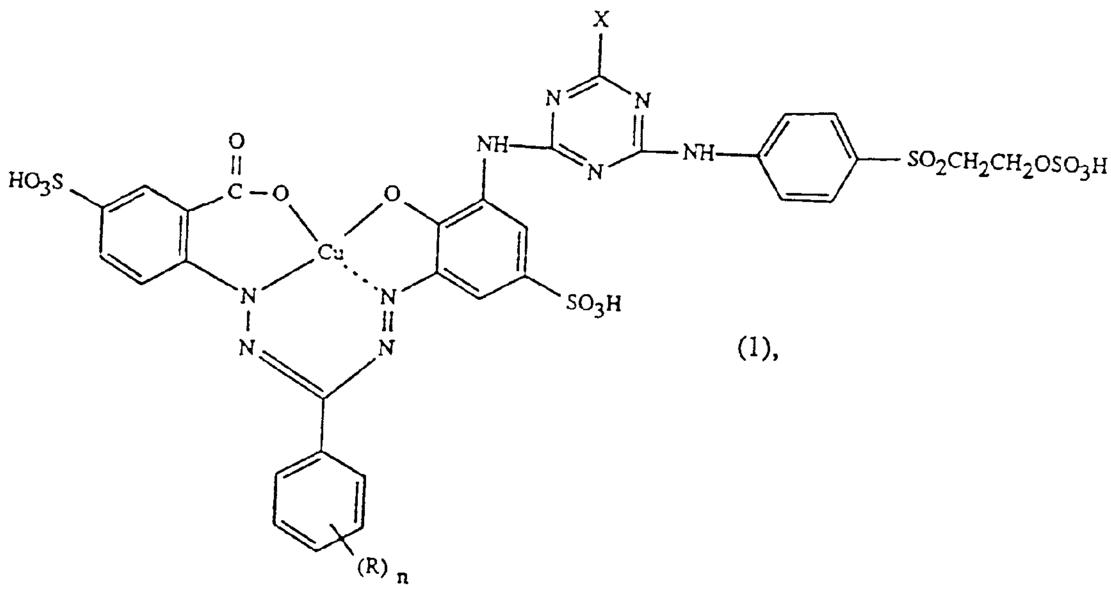

(1),

dans laquelle R représente un groupe alkyle en $C_1$-$C_4$, alkoxy en $C_1$-$C_4$, cyano, nitro ou un atome d'halogène, X un atome de fluor ou de chlore et dans laquelle n prend la valeur de 0, 1 ou 2, ensemble avec un colorant rouge contenant des groupes sulfo et réactif vis-à-vis des fibres et avec un colorant jaune-orangé contenant des groupes sulfo et réactif vis-à-vis des fibres.

7. Procédés conformes à la revendication 6 caractérisés en ce que l'on utilise comme colorants de couleur jaune-orangé et rouge contenant des groupes sulfo et réactifs vis-à-vis des fibres, des colorants azoïques.

8. Procédés conformes à une des revendications 6 ou 7, caractérisés en ce que le groupe réactif vis-à-vis des fibres des colorants de couleur jaune-orangé et rouge est une fonction triazine halogénée ou pyrimidine halogénée, ou un groupe de la série aliphatique.

9. Procédés conforme à une des revendications 6 à 8 caractérisés en ce que la fonction réactive des colorants de couleur jaune-orangé et rouge est le difluorochloropyrimidinyle, en particulier le 2,4-difluoro-5-chloropyrimidinyle ou l'α,β-dihalogénopropionyle, en particulier l'α-β-dibromopropionyle ou l'α-halogénoacryloyle, en particulier l'α-bromoacryloyle.

10. Procédés conformes à une des revendications 6 à 9 caractérisés en ce que l'on utilise pour la teinture ou l'impression en trichromie un matériau polyamide naturel, plus particulièrement de la laine.

11. Mélange de colorants trichrome caractérisés en ce que l'on mélange un colorant formazan réactif vis-à-vis des fibres obtenu conformément à la revendication 1 de formule

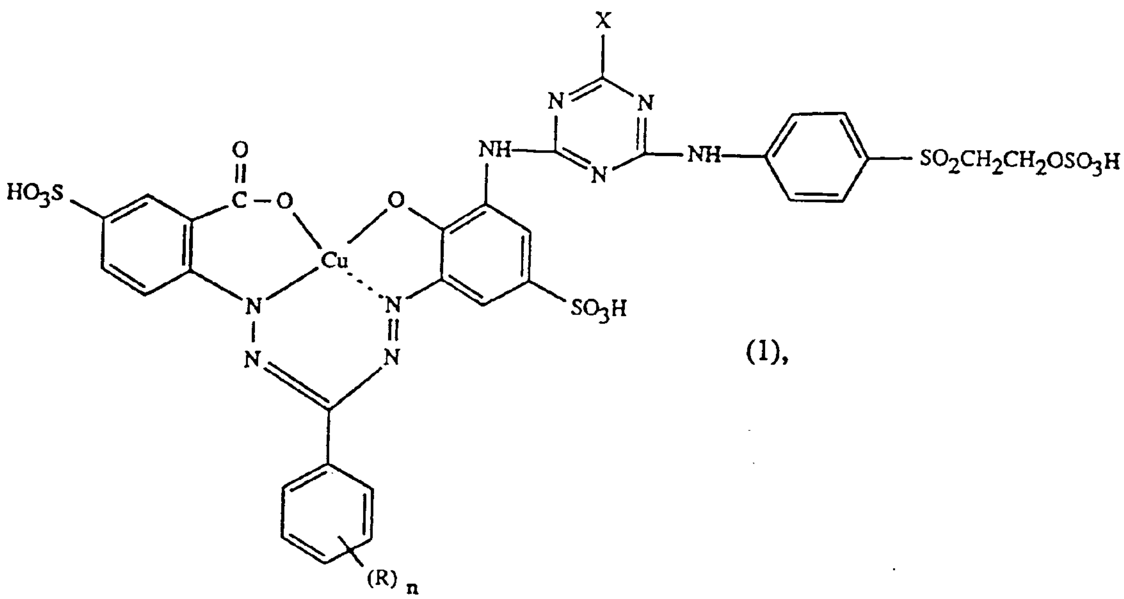

(1),

dans laquelle R représente un groupe alkyle en $C_1$-$C_4$, alkoxy en $C_1$-$C_4$, cyano, nitro ou un atome d'halogène, X représente un atome de fluor ou de chlore et dans laquelle n prend la valeur de 0, 1 ou 2, ensemble avec un colorant rouge contenant des groupes sulfo et réactif vis-à-vis des fibres et avec un colorant jaune-orangé contenant des groupes sulfo et réactif vis-à-vis des fibres.